# EUROPEAN PATENT APPLICATION

(11) **EP 4 807 483 A1**
(43) Date of publication of application: **16.09.2026**
(21) Application number: 24888282.1
(22) Date of filing: 19.06.2024
(51) Int. Cl.: G05D 1/43

(54) **MAP CREATION DEVICE AND MAP CREATION METHOD**

(30) Priority: 07.11.2023 JP 2023189723
(71) Applicant: Murata Machinery, Ltd., Kyoto-shi, Kyoto 601-8326 (JP)
(72) Inventor: DENDA, Yuki, Kyoto-shi, Kyoto 612-8686 (JP)
(74) Representative: Hoffmann Eitle
(86) International application number: PCT/JP2024/022192
(87) International publication number: WO 2025/099980

(57) **Abstract**

To reduce calculation time for correction processing, a map creation device includes a storage unit (141) and a control unit (143). The storage unit (141) stores position information, orientation information, and a local map (M2) in association with each other. When the control unit (143) detects a second loop point, which is in proximity to a second reference passing point as one of passing points, after a first reference passing point whose position relationship and/or orientation relationship is corrected, and which is another passing point at which a moving distance and/or an orientation change of the moving body (1) is more than a predetermined threshold value, with respect to the position information and/or the orientation information associated with the second reference passing point, it determines whether or not to correct the position relationship and/or the orientation relationship between the second reference passing point and the second loop point.

## Description

### TECHNICAL FIELD

The present invention relates to a map creation device and a map creation method for creating a map indicating a moving environment in which a moving body moves.

### BACKGROUND ART

There is known a moving body that autonomously moves along a moving route, by teaching the moving route set in a moving environment in advance. When teaching the moving route, the moving body records a plurality of passing points that has been passed during teaching of the moving route, as a taught moving route. By being controlled to pass the plurality of passing points indicated in the taught moving route, the moving body autonomously moves along the taught moving route.

When recording the moving route, the moving body uses a SLAM technique and compares an environment map with a map indicating positions of objects existing around the moving body (referred to as a local map), so as to estimate a position of itself (referred to as an own position). The environment map indicates positions of objects in the moving environment. The local map is acquired by the moving body using a sensor or the like during teaching of the movement. The moving body records the estimated own position as an estimated passing point corresponding to the passing point of the moving route. In addition, also when recording a position of an object in the moving environment during autonomous movement along the moving route, the moving body records the own position estimated as described above, as the estimated passing point corresponding to the passing point of the route that has been passed. During the period of teaching the moving route and the moving environment, using the SLAM technique, the environment map described above is also created, which is used for estimating the own position of the moving body.

However, because of wheel slipping, sensor noise, or the like, for example, an error may occur between the actual position and the estimated own position. Therefore, in the data collection device of Patent Citation 1, if a loop is detected when creating the environment map, position data is corrected, and the environment map is created on the basis of the corrected position data. The loop means that the moving body passes the same coordinates again, and that the moving body again passes the position that is in proximity to the position passed before.

### PRIOR ART CITATIONS

### PATENT CITATION

Patent Citation 1: Japanese Patent No. 6842519

### SUMMARY OF INVENTION

### TECHNICAL PROBLEM

As the number of times of correcting the estimated own position data is larger, it is possible to create the environment map that appropriately indicates the moving environment. However, for example, when teaching a moving route such as one for shuttling along a passage or a moving route for uniformly traveling in a specific area, a plurality of loops may occur successively. If the own position data is corrected for each of the successive plurality of loops, the number of times of correction processing increases, and hence calculation time for the correction processing is increased.

It is an object of the present invention to reduce the calculation time for the correction processing, when creating the environment map indicating the moving environment in which the moving body moves.

### TECHNICAL SOLUTION

Hereinafter, a plurality of embodiments are described as means for solving the problem. These embodiments can be arbitrarily combined as necessary.

A map creation device according to one embodiment of the present invention is a map creation device for creating an environment map when the moving body has moved from a first position to a second position in a moving environment. The map creation device includes a storage unit and a control unit. The storage unit stores position information as a position of the moving body, orientation information indicating an orientation of the moving body at the position, and a local map indicating a positional state of objects existing around the moving body, in association with each other, at a plurality of passing points the moving body passes during movement from the first position to the second position.

The control unit detects a first loop point, which is in proximity to a first reference passing point as one of the passing points, and which is another passing point at which a moving distance and/or an orientation change of the moving body is more than a predetermined threshold value, with respect to the position information and/or the orientation information associated with the first reference passing point.

The fact that the point is in proximity to the first reference passing point, and that the moving distance and/or the orientation change of the moving body at the point is more than a predetermined threshold value, with respect to the position information and/or the orientation information associated with the first reference passing point, means that the route in which the moving body has moved is a route for returning from a specific point to a point in proximity to the point after traveling a predetermined distance (referred to as a loop route).

The control unit calculates a first deviation amount of the position information and/or the orientation information, on the basis of comparison between the information associated with the first reference passing point and the information associated with the first loop point. The control unit corrects a position relationship and/or an orientation relationship between the first reference passing point and the first loop point, on the basis of the first deviation amount.

When the control unit detects a second loop point, which is in proximity to a second reference passing point as one of the passing points after the first reference passing point, and which is another passing point at which a moving distance and/or an orientation change of the moving body is more than a predetermined threshold value, with respect to the position information and/or the orientation information associated with the second reference passing point, it determines whether or not to correct the position relationship and/or the orientation relationship between the second reference passing point and the second loop point.

The fact that the point is in proximity to the second reference passing point, and that the moving distance and/or the orientation change of the moving body at the point is more than a predetermined threshold value, with respect to the position information and/or the orientation information associated with the second reference passing point, means that the route in which the moving body has moved is a route for returning from a specific point to a point in proximity to the point after traveling a predetermined distance (referred to as the loop route).

When determining to correct, the control unit calculates a second deviation amount of the position information and/or the orientation information, on the basis of comparison between the second reference passing point and the second loop point, and corrects the position relationship and/or the orientation relationship between the second reference passing point and the second loop point, on the basis of the second deviation amount.

In this map creation device, the control unit determines whether or not to correct the position relationship and/or the orientation relationship between the second reference passing point and the second loop point. Only in the case where the control unit determines to correct, the position relationship and/or the orientation relationship between the second reference passing point and the second loop point is corrected. As a result, calculation time for the correction processing can be reduced.

The control unit may determine whether or not to correct the position relationship and/or the orientation relationship between the second reference passing point and the second loop point, on the basis of a first criterion. The first criterion is based on the moving distance and/or the orientation change of the moving body after passing the first reference passing point until reaching the second reference passing point.

In this map creation device, only in the case where the control unit determines to correct on the basis of the first criterion, the position relationship and/or the orientation relationship between the second reference passing point and the second loop point is corrected. As a result, calculation time for the correction processing can be reduced.

The control unit may determine whether or not to correct the position relationship and/or the orientation relationship between the second reference passing point and the second loop point, on the basis of a second criterion. The second criterion is based on elapsed time after the moving body passes the first reference passing point until reaching the second reference passing point.

In this map creation device, only in the case where the control unit determines to correct on the basis of the second criterion, the position relationship and/or the orientation relationship between the second reference passing point and the second loop point is corrected. As a result, calculation time for the correction processing can be reduced.

In the first criterion, at least two steps of threshold values may be set.

As the loop route, for example, there is a loop route having a large moving distance of the moving body after passing the first reference passing point until reaching the second reference passing point, like a start point and an end point of a large ring-like loop route, and a loop route having a small moving distance of the moving body after passing the first reference passing point until reaching the second reference passing point, like a vicinity of a curve in a hairpin curve. Compared with the large loop route, the small loop route has a small moving distance of the moving body from the loop point until reaching the reference passing point, and hence an error due to wheel slipping, sensor noise, or the like hardly occurs for an estimated own position.

In this map creation device, by setting two steps of threshold values, the position relationship and/or the orientation relationship between the second reference passing point and the second loop point can be appropriately corrected, in accordance with a shape of the loop route.

In the second criterion, at least two steps of threshold values may be set.

In this map creation device, by setting two steps of threshold values, the position relationship and/or the orientation relationship between the second reference passing point and the second loop point can be appropriately corrected, in accordance with the shape of the loop route.

The control unit may determine whether or not to correct the position relationship and/or the orientation relationship between the second reference passing point and the second loop point, in accordance with the first criterion and/or the second criterion.

In this map creation device, it is determined whether or not to correct the position relationship and/or the orientation relationship between the second reference passing point and the second loop point, by combining the first criterion and the second criterion. As a result, the position relationship and/or the orientation relationship between the second reference passing point and the second loop point can be appropriately corrected.

The control unit may determine not to correct the position relationship and/or the orientation relationship between the second reference passing point and the second loop point, if the moving distance and/or the orientation change of the moving body after passing the first reference passing point until reaching the second reference passing point is smaller than a first threshold value set as the first criterion, and/or if the elapsed time after the moving body passes the first reference passing point until reaching the second reference passing point is smaller than a second threshold value set as the second criterion.

In this map creation device, calculation time for the correction processing can be reduced.

A map creation method according to another embodiment of the present invention is a method for creating an environment map when the moving body has moved from a first position to a second position in a moving environment. The map creation method includes the steps of:
(a) storing position information as a position of the moving body, orientation information indicating an orientation of the moving body at the position, and a local map indicating a positional state of objects existing around the moving body, in association with each other, at a plurality of passing points the moving body passes during movement from the first position to the second position;
(b) detecting a first loop point, which is in proximity to a first reference passing point as one of the passing points, and which is another passing point at which a moving distance and/or an orientation change of the moving body is more than a predetermined threshold value, with respect to the position information and/or the orientation information associated with the first reference passing point;
(c) calculating a first deviation amount of the position information and/or the orientation information, on the basis of comparison between the information associated with the first reference passing point and the information associated with the first loop point;
(d) correcting a position relationship and/or an orientation relationship between the first reference passing point and the first loop point on the basis of the first deviation amount;
(e) determining whether or not to correct the position relationship and/or the orientation relationship between a second reference passing point and a second loop point, when detecting the second loop point, which is in proximity to the second reference passing point as one of the passing points after the first reference passing point, and which is another passing point at which a moving distance and/or an orientation change of the moving body is more than a predetermined threshold value, with respect to the position information and/or the orientation information associated with the second reference passing point;
(f) calculating a second deviation amount of the position information and/or the orientation information, on the basis of comparison between the second reference passing point and the second loop point, when determining to correct; and
(g) correcting the position relationship and/or the orientation relationship between the second reference passing point and the second loop point, on the basis of the second deviation amount.

In this map creation method, it is determined whether or not to correct the position relationship and/or the orientation relationship between the second reference passing point and the second loop point. Only in the case where it is determined to correct, the position relationship and/or the orientation relationship between the second reference passing point and the second loop point is corrected. As a result, calculation time for the correction processing can be reduced.

Note that in this disclosure, concerning a temporal relationship between the first reference passing point and the first loop point, either one of them can be the passing point that the moving body first passes. In the same manner, concerning a temporal relationship between the second reference passing point and the second loop point, either one of them can be the passing point that the moving body first passes. In addition, the second reference passing point is a passing point that the moving body passes after passing the first reference passing point. On the other hand, concerning a temporal relationship between the first loop point and the second loop point, there can be a case where either one of them is the passing point that the moving body first passes. For instance, in a case of a meandering route, the detected second loop point may be an earlier passing point than the first loop point.

The step of determining whether or not to correct may further include the step of:
(h) determining whether or not to correct the position relationship and/or the orientation relationship between the second reference passing point and the second loop point, on the basis of a first criterion.

The first criterion is based on the moving distance and/or the orientation change of the moving body after passing the first reference passing point until reaching the second reference passing point.

In this map creation method, only in the case where the control unit determines to correct on the basis of the first criterion, the position relationship and/or the orientation relationship between the second reference passing point and the second loop point is corrected. As a result, calculation time for the correction processing can be reduced.

The step of determining whether or not to correct may further include the step of:
(i) determining whether or not to correct the position relationship and/or the orientation relationship between the second reference passing point and the second loop point, on the basis of a second criterion.

The second criterion is based on elapsed time after the moving body passes the first reference passing point until reaching the second reference passing point.

In this map creation method, only in the case where the control unit determines to correct on the basis of the second criterion, the position relationship and/or the orientation relationship between the second reference passing point and the second loop point is corrected. As a result, calculation time for the correction processing can be reduced.

In the first criterion, at least two steps of threshold values may be set.

As the loop route, there is a loop route having a large moving distance of the moving body after passing the first reference passing point until reaching the second reference passing point, like a start point and an end point of a large ring-like loop route, and a loop route having a small moving distance of the moving body after passing the first reference passing point until reaching the second reference passing point, like a vicinity of a curve in a hairpin curve. Compared with the large loop route, the small loop route has a small moving distance of the moving body from the loop point until reaching the reference passing point, and hence an error due to wheel slipping, sensor noise, or the like hardly occurs for an estimated own position.

In this map creation method, by setting two steps of threshold values, the position relationship and/or the orientation relationship between the second reference passing point and the second loop point can be appropriately corrected, in accordance with a shape of the loop route.

In the second criterion, at least two steps of threshold values may be set.

As the loop route, there is a loop route having a large elapsed time after the moving body passes the first reference passing point until reaching the second reference passing point, like a start point and an end point of a large ring-like loop route, and a loop route having a small elapsed time after the moving body passes the first reference passing point until reaching the second reference passing point, like a vicinity of a curve in a hairpin curve. Compared with the large loop route, the small loop route has a small moving distance of the moving body from the loop point until reaching the reference passing point, and hence an error due to wheel slipping, sensor noise, or the like hardly occurs for an estimated own position.

In this map creation method, by setting two steps of threshold values, the position relationship and/or the orientation relationship between the second reference passing point and the second loop point can be appropriately corrected, in accordance with the shape of the loop route.

The step of determining whether or not to correct may further include the step of:
(j) determining whether or not to correct the position relationship and/or the orientation relationship between the second reference passing point and the second loop point, in accordance with the first criterion and/or the second criterion.

In this map creation method, it is determined whether or not to correct the position relationship and/or the orientation relationship between the second reference passing point and the second loop point, by combining the first criterion and the second criterion. As a result, the position relationship and/or the orientation relationship between the second reference passing point and the second loop point can be appropriately corrected.

The step of determining whether or not to correct may further include the step of:
(k) determining not to correct the position relationship and/or the orientation relationship between the second reference passing point and the second loop point, if the moving distance and/or the orientation change of the moving body after passing the first reference passing point until reaching the second reference passing point is smaller than a first threshold value set as the first criterion, and/or if the elapsed time after the moving body passes the first reference passing point until reaching the second reference passing point is smaller than a second threshold value set as the second criterion.

In this map creation method, calculation time for the correction processing can be reduced.

### ADVANTAGEOUS EFFECTS

When creating the environment map indicating the moving environment in which the moving body moves, calculation time for the correction processing can be reduced.

### BRIEF DESCRIPTION OF DRAWINGS

Fig. 1 is a diagram illustrating a configuration of a moving body.
Fig. 2 is a diagram illustrating a configuration of a control device.
Fig. 3 is a flowchart illustrating a schematic operation of the moving body.
Fig. 4 is a flowchart illustrating a process of the moving body in a manual mode.
Fig. 5 is a flowchart illustrating a process in an adjacent correction.
Fig. 6 is a flowchart illustrating a process in a loop detection of a first embodiment.
Fig. 7 is a diagram illustrating one example of a loop route of the first embodiment.
Fig. 8 is a flowchart illustrating a process in successive loop determination of the first embodiment.
Fig. 9 is a flowchart illustrating a process executed in a loop correction.
Fig. 10 is a flowchart illustrating a process in the loop detection of a second embodiment.
Fig. 11 is a diagram illustrating one example of the loop route of the second embodiment.
Fig. 12 is a flowchart illustrating a process in the successive loop determination of the second embodiment.
Fig. 13 is a flowchart illustrating a process in the successive loop determination.
Fig. 14 is a flowchart illustrating a process in the successive loop determination.
Fig. 15 is a flowchart illustrating a process in the successive loop determination.

### DESCRIPTION OF EMBODIMENTS

### 1. First Embodiment

### (1) Configuration of Moving Body

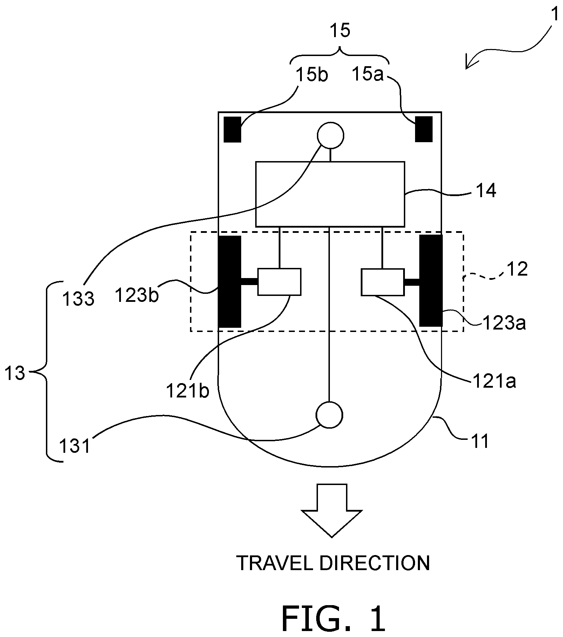

A moving body 1 according to a first embodiment is described. The moving body 1 is, for example, a moving body that can autonomously move by replicating a route taught by a user. With reference to Fig. 1, a configuration of the moving body 1 is described. Fig. 1 is a diagram illustrating a configuration of the moving body 1. The moving body 1 includes mainly a main body 11, a moving unit 12, a laser range sensor 13, and a control device 14 (one example of a map creation device).

The moving unit 12 is, for example, a differential two-wheel type traveling unit that moves the main body 11. Specifically, the moving unit 12 includes a pair of motors 121a and 121b, and a pair of wheels 123a and 123b. The pair of motors 121a and 121b are, for example, electric motors such as servo motors or brushless motors disposed in a bottom part of the main body 11. The pair of motors 121a and 121b are connected to the control device 14, and rotate their output rotation shafts independently of each other at arbitrary rotational frequency and torque, on the basis of an instruction from the control device 14.

The pair of wheels 123a and 123b each partially contact a floor surface (moving surface) in a moving environment ME, and are connected to the output rotation shafts of the pair of motors 121a and 121b, respectively. In this way, the wheels 123a and 123b are independently driven to rotate by the motors 121a and 121b, respectively, so as to move the main body 11. Because the pair of wheels 123a and 123b can rotate independently of each other, by making a difference between rotational frequencies of the wheels 123a and 123b, an orientation of the main body 11 can be changed. On the other hand, by making the same rotational frequency between the pair of wheels 123a and 123b, the main body 11 can be moved in a straight line.

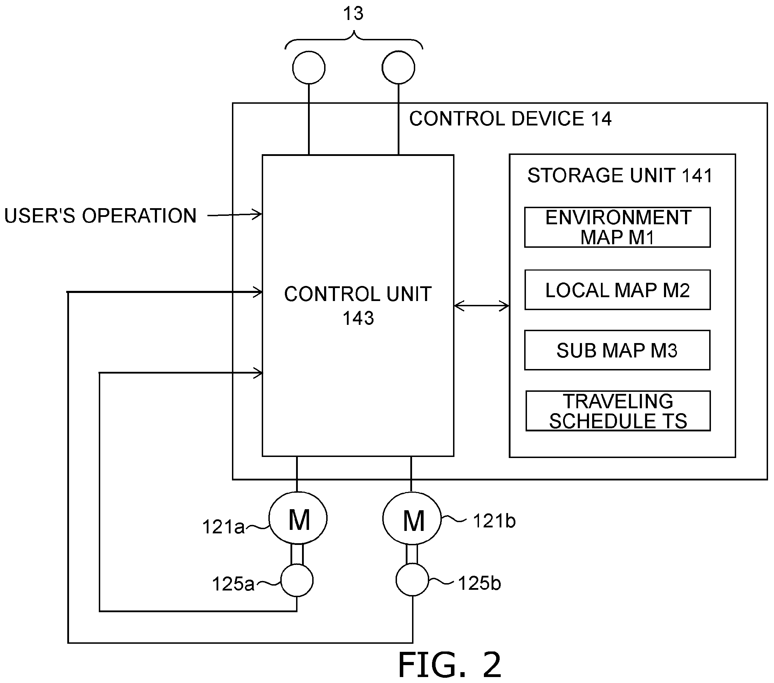

The output rotation shafts of the motors 121a and 121b are provided with encoders 125a and 125b, respectively (Fig. 2). The encoders 125a and 125b are, for example, incremental type encoders that output pulse signals based on rotation amounts of the output rotation shafts of the motors 121a and 121b, respectively. In this way, the control device 14 can estimate a position and/or an orientation of the moving body 1 (the main body 11) in the moving environment ME, on the basis of the rotation amounts of the motors 121a and 121b, i.e., rotation amounts of the wheels 123a and 123b.

The laser range sensor 13 is, for example, a laser range finder (LRF), which projects a laser beam generated by pulse oscillation from a laser oscillator to objects as structures in the moving environment ME (such as pillars, shelves, walls, and the like disposed in the moving environment ME) in a radial manner, and receives reflection light reflected from the obstacles with a laser receiver, so as to acquire information about the objects. The laser range sensor 13 includes a first laser range sensor 131 disposed in a front part of the main body 11, and a second laser range sensor 133 disposed in a rear part of the main body 11.

The first laser range sensor 131 generates a laser beam in a radial manner in the left and right direction in front of the main body 11, so as to acquire information about objects existing in front of the main body 11 around the first laser range sensor 131. The object detection range of the first laser range sensor 131 is within a circle of a radius of approximately 5 m, for example.

On the other hand, the second laser range sensor 133 generates a laser beam in a radial manner in the left and right direction in back of the main body 11, so as to acquire information about objects existing in back of the main body 11 around the second laser range sensor 133. The object detection range of the second laser range sensor 133 is within a circle of a radius of approximately 5 m, for example.

Note that the detectable range of the laser range sensor 13 is not limited to the above value but can be appropriately changed in accordance with use of the moving body 1, or the like.

In addition, as the sensor for acquiring the information about objects, other than the laser range finder, it is possible to use a sensor that can measure distance between an object existing around and the sensor (the main body 11). For instance, a time of flight (TOF) camera or the like can be used. Further, it is possible to use a system or the like that can allow a sensor for measuring a one-dimensional or two-dimensional distance to work as a sensor for measuring a two-dimensional or three-dimensional distance.

Note that hereinafter, an example using two-dimensional (X-Y coordinate system) data of an object is described, and the following description can also be applied to three-dimensional (X-Y-Z coordinate system) data in the same manner.

The control device 14 is a computer system including a central processing unit (CPU), a hard disk device, a read only memory (ROM), a random access memory (RAM), a storage device such as a storage medium reading device, an interface for performing signal conversion. The control device 14 performs various information processing necessary for control of individual portions of the moving body 1 and for movement of the moving body 1.

The moving body 1 may further include an auxiliary wheel unit 15. The auxiliary wheel unit 15 includes two auxiliary wheels 15a and 15b. The two auxiliary wheels 15a and 15b are attached in a rotatable manner independently of each other. Because the auxiliary wheel unit 15 is provided, the moving body 1 can move stably and smoothly.

### (2) Configuration of Control Device

With reference to Fig. 2, a configuration of the control device 14 is described. Fig. 2 is a diagram illustrating a configuration of the control device 14. The control device 14 includes a storage unit 141 and a control unit 143. The storage unit 141 is a part of a storage area of the storage device of the computer system constituting the control device 14. The storage unit 141 stores various information to be used for controlling the moving body 1.

The control unit 143 is the CPU, the interface, and the like constituting the control device 14, and performs various information processing concerning control of the moving body 1. A part or the whole of functions of the control unit 143 described below may be realized as a program that can be executed in the control device 14. In addition, the program may be stored in the storage unit 141 of the control device 14. A part or the whole of the functions of the control unit 143 may be realized by another control device (system) connected to the moving body 1. This control device may be connected to the moving body 1 by physical or other means. Further, this control device may be connected to the moving body 1 via a network, directly or via another control device. Alternatively, a part or the whole of the functions described above may be realized by hardware provided to the control device 14, such as a custom IC.

The control unit 143 acquires distance information indicating a distance to an object existing around the moving body 1, on the basis of a signal acquired from the laser range sensor 13, and stores the distance information in the storage unit 141. Next, it generates a local map M2 from the stored distance information, and stores the same in the storage unit 141. The local map M2 is map information indicating a positional state of objects existing in a predetermined area around the moving body 1.

The control unit 143 estimates position information and/or orientation information during movement of the moving body 1 in the moving environment ME. The position information means a position of the moving body 1 (referred to as an own position) in the moving environment ME. The orientation information means information indicating a facing angle (direction) of the moving body 1 with respect to a predetermined axis (e.g., an X-axis of a coordinate system (X-Y coordinate system) for indicating the moving environment ME). After estimating the position information and the orientation information, the control unit 143 creates a traveling schedule TS and an environment map M1, and stores them in the storage unit 141. The environment map M1 is map information indicating the moving environment ME in which the moving body 1 moves.

The control unit 143 controls the motors 121a and 121b. For instance, the control unit 143 calculates control quantities of the motors 121a and 121b, and outputs drive powers based on the control quantities to the motors 121a and 121b, respectively. The control unit 143 calculates the control quantities of the motors 121a and 121b, so that the rotation amounts (rotational speeds) per unit time of the motors 121a and 121b input from the encoders 125a and 125b become desired rotational speeds, respectively (feedback control).

The control unit 143 can execute either an autonomous mode or a manual mode. It may be possible to configure so that the user operates to select the autonomous mode or the manual mode to be executed.

When executing the autonomous mode, the control unit 143 calculates control quantities of the motors 121a and 121b, on the basis of a difference between the position information and/or the orientation information indicated in the traveling schedule TS stored in the storage unit 141 and the position information and/or the orientation information estimated during movement. The control unit 143 outputs the drive powers based on the calculated control quantities to the motors. In this way, when executing the autonomous mode, the control unit 143 can move the moving body 1 autonomously in accordance with the traveling schedule TS.

On the other hand, when executing the manual mode, the control unit 143 receives a user's operation using a controller or a computer system that can communicate with the moving body 1 via wireless or wired, or an operating device such as a steering wheel (not shown) provided to the moving body 1, for example. The control unit 143 controls the motors 121a and 121b on the basis of the user's operation. In this way, the moving body 1 can move by the user's operation. By moving the moving body 1 in accordance with the user's operation, it is possible to acquire data for creating the environment map M1, and data for creating the traveling schedule TS (such as position information, orientation information, and the like).

### (3) Schematic Operation of Moving Body

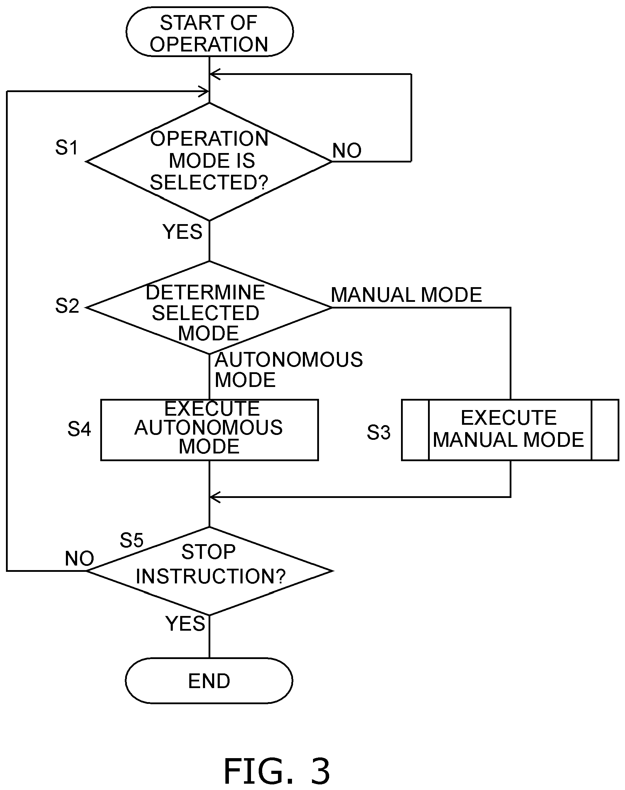

With reference to Fig. 3, an operation of the moving body 1 is described. Fig. 3 is a flowchart illustrating a schematic operation of the moving body 1. When the moving body 1 starts the operation, the control unit 143 of the control device 14 determines whether or not the user has selected the operation mode (Step S1). If the user has selected the operation mode (in the case of "Yes" in Step S1), the control unit 143 determines whether the selected operation mode is the manual mode or the autonomous mode (Step S2).

If it is determined that the selected operation mode is the manual mode (in the case of "the manual mode" in Step S2), the control unit 143 executes the manual mode (Step S3). On the other hand, if it is determined that the selected operation mode is the autonomous mode (in the case of "the autonomous mode" in Step S2), the control unit 143 executes the autonomous mode (Step S4).

In the autonomous mode, the control unit 143 performs map matching between the environment map M1 and the local map M2 acquired by the moving body 1 during movement, so as to estimate the own position of the moving body 1 and/or the facing direction (orientation of the moving body 1), and it controls the motors 121a and 121b on the basis of the estimated own position and/or facing direction (orientation of the moving body 1) and the traveling schedule TS. In this way, the moving body 1 can autonomously move in accordance with the traveling schedule TS.

After that, for example, when the user instructs to stop the travel in the manual mode or the autonomous mode, or when the moving body 1 has passed all the passing points indicated in the traveling schedule TS to reach the movement end position (in the case of "Yes" in Step S5) in the autonomous mode, the control unit 143 stops the travel of the moving body 1. Otherwise (in the case of "No" in Step S5), Steps S1 to S4 described above are executed continuously.

### (4) Manual Mode

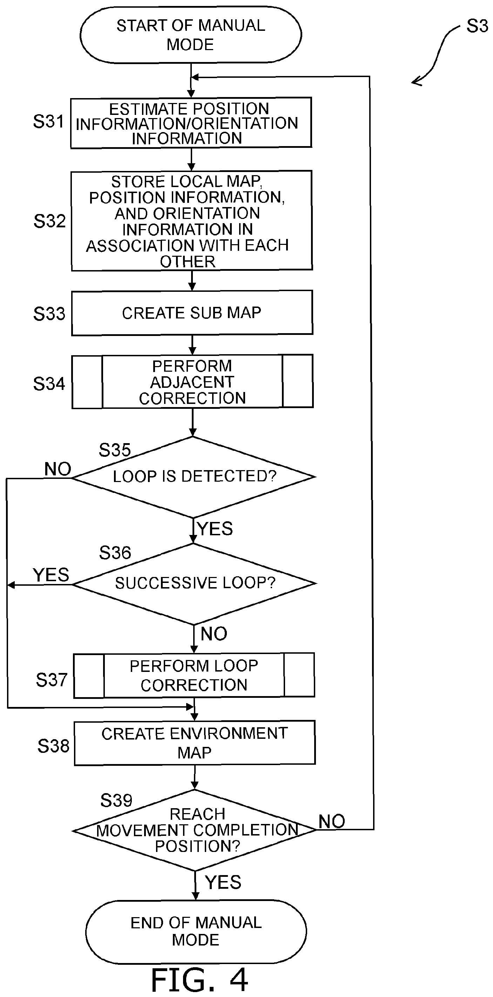

Next, with reference to Fig. 4, the manual mode executed in the above Step S3 is described. Fig. 4 is a flowchart illustrating an operation of the moving body 1 in the manual mode. In the manual mode, the control unit 143 creates the environment map M1 and the traveling schedule TS. The environment map M1 and the traveling schedule TS are created when the moving body 1 is moved by the user's operation from a movement start position to a movement end position along a moving route R1 in the moving environment ME. The traveling schedule TS may be created from data indicating a plurality of passing points on this moving route. In addition, the control device 14 may create the traveling schedule TS from the environment map M1.

First, the moving body 1 is placed at the movement start position, and the manual mode is executed. After that, the control unit 143 controls the motors 121a and 121b in accordance with a user's operation, so as to move the moving body 1. During movement of the moving body 1, the control unit 143 estimates position information indicating the own position of the moving body 1 and orientation information indicating the orientation of the moving body 1, every predetermined period (every passing point) (Step S31).

Specifically, as described below, the control unit 143 acquires the local map M2 indicating the positional state of objects existing around a current position of the moving body 1. The control unit 143 calculates a distance between the laser range sensor 13 and an object, from a time difference between the timing when the laser range sensor 13 emits the laser beam and the timing when the laser range sensor 13 (laser receiver) receives the reflection light. In addition, it is possible to calculate a direction to the object from the main body 11, on the basis of an angle of a light reception surface of the laser receiver when receiving the reflection light, for example.

After that, the control unit 143 acquires the distance information, which is a relative distance of the object from the main body 11 calculated from the time difference as described above, and an angle of the light reception surface when receiving the reflection light, and then converts the same into coordinate values on a coordinate plane indicating the moving environment ME. In this way, it is possible to acquire the local map M2, which is map information indicating a relative position of an object existing around the moving body 1, with respect to the moving body 1. The control unit 143 stores the distance information and the local map M2, acquired as described above, in the storage unit 141.

After acquiring the local map M2, the control unit 143 estimates the position information indicating the own position of the moving body 1 and the orientation information indicating the direction of the moving body 1, by map matching between the acquired local map M2 and the environment map M1 (or a sub map M3 described later) created up to the moment.

Specifically, the control unit 143 first calculates position and orientation of the moving body 1 on the environment map M1, on the basis of rotation amounts of the motors 121a and 121b (the wheels 123a and 123b) acquired from the encoders 125a and 125b (dead reckoning). Next, it places the local map M2 at the position calculated by the dead reckoning on the environment map M1. Further, the control unit 143 rotates the local map M2 at the position so as to correspond to the direction calculated by the dead reckoning, and performs map matching between the environment map M1 and the local map M2.

In this case, considering estimation errors of position and orientation by the dead reckoning, a placement position and a rotation angle when placing the local map M2 on the environment map M1 are allowed to have ranges. Specifically, the control unit 143 places the local map M2 at a plurality of positions on the environment map M1 within a predetermined range around the position and orientation estimated by the dead reckoning. The control unit 143 rotates the local map M2 within a predetermined rotation angle range at each of the plurality of positions.

After that, among a plurality of the placement positions and a plurality of the rotation angles described above, a placement position and a rotation angle at which the local map M2 matches most with the environment map M1 are estimated, by the control unit 143, to be the own position of the moving body 1 and the orientation of the moving body 1, respectively. This estimation of the own position and orientation by map matching can be performed by "likelihood calculation", for example.

After estimating the position information and the orientation information of the moving body 1, the control unit 143 stores the local map M2 acquired in Step S31, the position information of the moving body 1 estimated in Step S31, and the orientation information of the moving body 1, in association with each other as passing point information in the storage unit 141 (Step S32).

In addition, the control unit 143 records the position information and the orientation information estimated in Step S31, in association with each other, sequentially in the traveling schedule TS. In this way, it is possible to create the traveling schedule TS expressed by the estimated position information and orientation information, from the passing points that have been passed during the period from the movement start position to the current position. In this case, the control unit 143 may record, in addition to the position information and the orientation information, information of elapsed time from the movement start, moving speed of the moving body 1, and the like, in association with each other, in the traveling schedule TS.

The control unit 143 executes Steps S31 to S32 until a predetermined traveling distance is reached. In this way, during movement of a predetermined distance, a predetermined number of the local maps M2, position information, orientation information, and distance information are acquired.

When the moving body 1 moves beyond a predetermined distance, the control unit 143 creates the sub map M3 on the basis of a predetermined number of the local maps M2, associated with a predetermined number of the position information and the orientation information, acquired during the period while the moving body 1 moves a predetermined distance (Step S33). In this case, the number of the local maps M2 included in one sub map M3 is appropriately changed. Specifically, in the coordinate system defining the environment map M1, the control unit 143 places each of the predetermined number of local maps M2 acquired by execution of Steps S31 to S32, at the coordinates of the position information where the local map M2 is acquired. The control unit 143 rotates the local map M2 by the angle indicated in the orientation information at the coordinates, so as to create the sub map M3.

In addition, the control unit 143 associates the created sub map M3 with a representative point and representative point information. The representative point is a point that represents the sub map M3 in the coordinate system defining the environment map M1. The representative point information is information including the position information of the sub map M3 at the representative point (referred to as a representative position), and the orientation information indicating the orientation of the sub map M3 at the position (referred to as a representative orientation). For instance, the representative point can be the passing point of the moving body 1 acquired by executing Steps S31 to S32. The representative point information can be, for example, information including the position information at the passing point of the moving body 1 and the orientation information at the position, acquired by executing Steps S31 to S32. In other words, the representative point can be appropriately selected from the passing points of the local map M2 constituting the sub map M3, and the representative point information can be information including the position information and the orientation information at the passing point. More specifically, the representative point can be a first passing point among the predetermined number of passing points of the local map M2 constituting the sub map M3, and the representative point information can be information including the position information and the orientation information at the first passing point. The created sub map M3 is stored in the storage unit 141.

As described above, because the sub map M3 is a predetermined number of the local maps M2 acquired by moving the moving body 1 in the moving environment ME, it is map information indicating a part of the moving environment ME. In other words, the sub map M3 corresponds to a part of the environment map M1.

After creating the sub map M3, the control unit 143 performs adjacent correction (Step S34). In the adjacent correction, a deviation of the position relationship and/or the orientation relationship, between the representative position and/or the representative orientation of a specific sub map M3 and the representative position and/or the representative orientation of a sub map M3 having an adjacent relationship with the specific sub map M3 (the orientation relationship between the two sub maps M3) is corrected. In this way, the representative point information (the representative position and the representative orientation) associated with the sub map M3 is corrected. Specific processing in the adjacent correction will be described later. Here, the "sub map M3 having an adjacent relationship" is not limited to a sub map M3 just before or just after the specific sub map M3, but may be a sub map M3 at a position relatively close to the specific sub map M3 even if it is not just before or just after the same.

After performing the adjacent correction, the control unit 143 performs loop detection (Step S35). In the loop detection, on the basis of the representative position and/or the representative orientation of one sub map M3 (first sub map), it is determined whether or not there is a sub map M3 (second sub map) having a relationship in which the representative position and/or the representative orientation forms a loop route. The loop route means a route that is formed when the moving body 1 moves from a specific position and later returns to the specific position or a position near the same. On the basis of this property of the loop route, the control unit 143 determines whether or not there are the two sub maps M3 having a relationship where the representative position and/or the representative orientation forms a loop route. Specific processing in the loop detection will be described later.

If a loop is not detected (in the case of "No" in Step S35), the process proceeds to Step S38, and the control unit 143 creates the environment map M1.

On the other hand, if a loop is detected (in the case of "Yes" in Step S35), the control unit 143 performs determination whether or not it is a successive loop (successive loop determination) (Step S36). In the following description, in the relationship where a loop shape is formed, the representative point of the first sub map is referred to as the reference passing point, and the representative point of the second sub map is referred to as the loop point. In the successive loop determination, it is determined whether or not the reference passing point detected this time is successive from the reference passing point at which a loop correction (described later) was performed last time. Specific processing in the successive loop determination will be described later.

In the successive loop determination, if it is determined that they are successive (in the case of "Yes" in Step S36), the process proceeds to Step S38 without performing the loop correction, and the control unit 143 creates the environment map M1.

In the successive loop determination, if it is determined that they are not successive (in the case of "No" in Step S36), the control unit 143 performs the loop correction (Step S37). In the loop correction, a deviation amount of the position information and/or the orientation information is calculated on the basis of comparison between the reference passing point and the loop point, and the position relationship and/or the orientation relationship between the reference passing point and the loop point is corrected on the basis of the deviation amount, so that the representative point information associated with the sub map M3 is corrected. In other words, the loop correction is correction of the deviation of the position relationship and/or the orientation relationship between the two sub maps M3 whose representative points are the reference passing point and the loop point. Specific processing in the loop correction will be described later.

After correcting the representative point information, the control unit 143 creates the environment map M1 on the basis of the position information and/or the orientation information (i.e., the representative point information) after the correction (Step S38). Specifically, the control unit 143 associates the corrected representative point information with the map information of the sub map M3 having the representative point information, so as to create the environment map M1. In other words, the environment map M1 is constituted of the sub maps M3 created so far. Therefore, the environment map M1 created before the moving body 1 reaches the movement end position becomes a part of the environment map M1 to be completed. Steps S31 to S38 are performed repeatedly before the moving body 1 reaches the movement end position, and hence the environment map M1 in a completed state is created.

In addition, the control unit 143 corrects the position information and/or the orientation information included in the traveling schedule TS, on the basis of the position information and/or the orientation information after the correction. For instance, the position information and the orientation information included in the traveling schedule TS is corrected, in accordance with a correction quantity of the representative point information at the position closest to the position information and the orientation information, and hence it is possible to appropriately correct the position information/orientation information included in the traveling schedule TS.

After creating the environment map M1, the control unit 143 determines whether or not the moving body 1 has reached a movement completion position of the moving route R1, by the user's operation (Step S39). If the moving body 1 has not reached the movement completion position (in the case of "No" in Step S39), Steps S31 to S38 described above are performed again. On the other hand, if the moving body 1 has reached the movement completion position (in the case of "Yes" in Step S39), the movement by the user's operation in the manual mode is finished.

### (5) Adjacent Correction

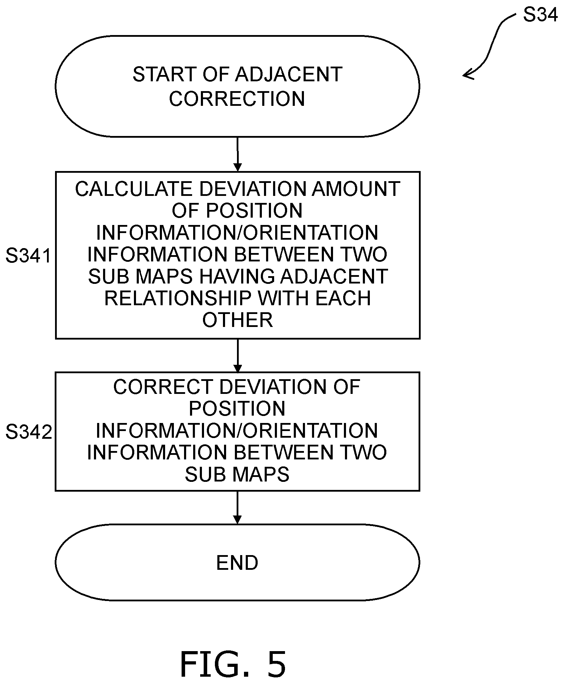

Hereinafter, with reference to Fig. 5, the process performed by the control unit 143 in the adjacent correction is described. Fig. 5 is a flowchart illustrating a process performed in the adjacent correction. The adjacent correction corrects the deviation of the position relationship between the two sub maps M3 having an adjacent relationship with each other. Specifically, the adjacent correction is performed by the following process.

First, the control unit 143 calculates the deviation amount of the position information between the two sub maps M3 having an adjacent relationship with each other (Step S341). The control unit 143 performs scan matching described later on the two sub maps M3 having an adjacent relationship with each other, so as to calculate the deviation amount of the position information between the two sub maps M3.

After calculating the deviation amount of the position information between the two sub maps M3 described above, the control unit 143 corrects the position relationship between the sub maps M3 having an adjacent relationship with each other, on the basis of the calculated deviation amount (Step S342). The control unit 143 distributes the deviation amount of the position information between the two sub maps M3 described above to the representative points of all the sub maps M3 created so far, so as to correct the representative point information of all the sub maps M3. This correction can be realized, for example, by graph optimization using a nonlinear least-squares method performed on the representative point information of all the sub maps M3. In addition, the above correction can also be realized by other method.

By performing Step S341 to Step S342 described above so as to correct the deviation between the two sub maps M3 having an adjacent position relationship, it is possible to correct the deviation between the two sub maps M3 existing particularly in a part other than the loop route. As a result, it is possible to create a more accurate environment map M1.

### (6) Loop Detection

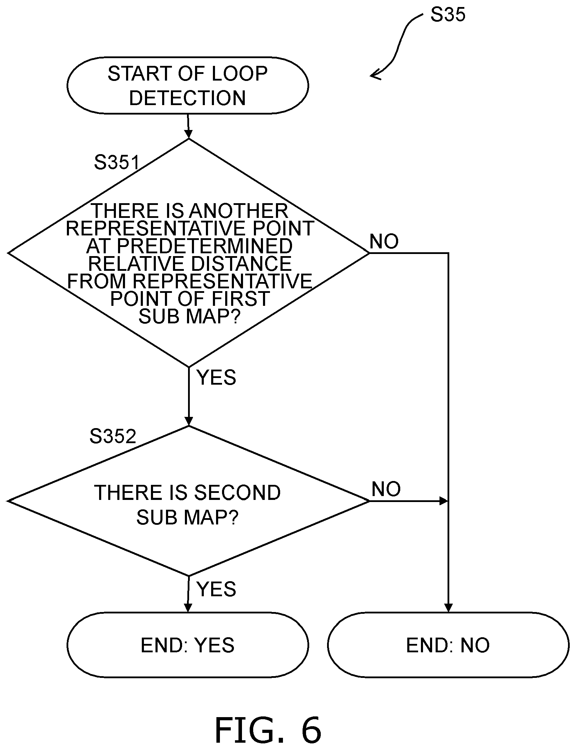

Hereinafter, with reference to Fig. 6, the process performed by the control unit 143 in the loop detection is described. Fig. 6 is a flowchart illustrating a process performed in the loop detection. In the loop detection, on the basis of the representative position and the representative orientation of one sub map M3 (the first sub map), it is determined whether or not there is another sub map M3 (the second sub map) having a relationship where the representative position and the representative orientation form a loop route.

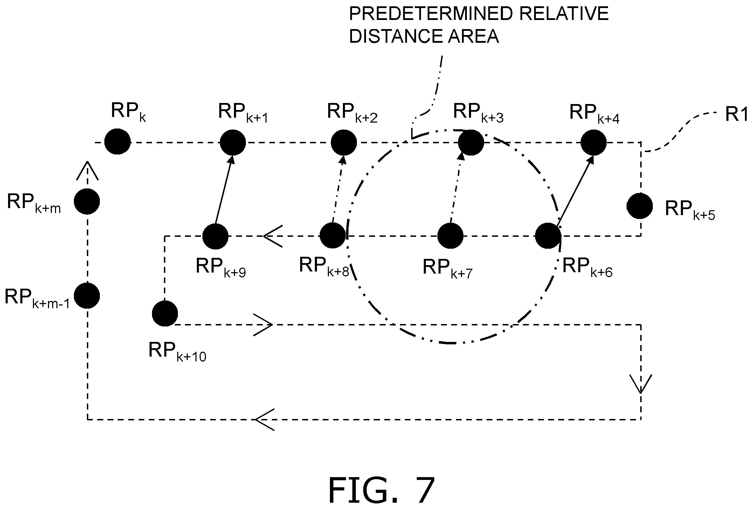

In the following description, as illustrated in Fig. 7, in the moving route R1 that is being taught, the loop detection in the moving route R1 is exemplified and described, in which a representative point RPₖ is the start point, representative points RPₖ₊₁, RPₖ₊₂, RPₖ₊₃, ... and RPₖ₊ₘ₋₁ are passed from the representative point RPₖ, and a representative point RPₖ₊ₘ is the end point. Note that the representative orientations at the representative points RPₖ, RPₖ₊₁, RPₖ₊₂, ..., RPₖ₊ₘ₋₁, and RPₖ₊ₘ are denoted by θₖ, θₖ₊₁, θₖ₊₂, ..., θₖ₊ₘ₋₁, and θₖ₊ₘ, respectively. In addition, it is supposed that the moving body 1 has traveled along the moving route R1 described above so as to reach the position corresponding to the representative point RPₖ₊ₘ up to the moment. Fig. 7 is a diagram illustrating one example of the moving route R1.

First, the control unit 143 determines whether or not there are the two sub maps M3 (the first sub map and the second sub map) having the relationship in which the representative positions and/or the representative orientations form a loop route. The loop route is a route formed when the moving body 1 moves from a specific position and later returns to the specific position or a position close thereto. On the basis of this property of the loop route, the control unit 143 determines whether or not there are the two sub maps M3 having the relationship in which the representative positions and/or the representative orientations form a loop route. The control unit 143 performs the loop detection from the representative point of the start point to the representative point of the end point of the moving route R1, for example. Specifically, this determination is performed by the following process.

First, the control unit 143 selects one of the sub maps M3 as the first sub map, and determines whether or not there is the representative point of another sub map M3 within a range of relative distance from the representative point of this first sub map, which is a predetermined value or less (Step S351). In the example illustrated in Fig. 7, it is supposed that the sub map M3 having a representative point RPₖ₊₇ is selected as the first sub map, for example. In this case, the control unit 143 determines that the sub map M3 having the representative point RPₖ₊₃ and the sub map M3 having a representative point RPₖ₊₆, whose relative distances from the representative point RPₖ₊₇ are within the range of a predetermined value or less, are candidates of the second sub map.

As described above, if there is the representative point of another sub map M3 within the range of relative distance from the representative point of the first sub map, which is a predetermined value or less (in the case of "Yes" in Step S351), the control unit 143 determines whether or not there is the second sub map in the sub maps M3 found in Step S351 (candidates of the second sub map) (Step S352). The second sub map is, among the sub maps M3 found in Step S351, the sub map M3 in which the moving distance and/or the orientation change of the moving body 1 is more than a predetermined threshold value determined in advance (referred to as a third threshold value), with respect to the representative position and/or the representative orientation associated with the first sub map. Specifically, for example, among the sub maps M3 found in Step S351, the second sub map is the sub map M3 in which the moving distance from one representative position to the other representative position of the first sub map and the found sub map M3 is more than the third threshold value, and/or a difference between one representative orientation and the other representative orientation (i.e., the orientation change) of the first sub map and the found sub map M3 is more than third threshold value. The control unit 143 determines whether or not there is a second sub map as described above. As described above, the representative point of the first sub map is referred to as the reference passing point, and the representative point of the second sub map is referred to as the loop point.

Note that also in the case where the moving distance from one representative position to the other representative position of the first sub map and the found sub map M3 is more than the third threshold value, but a difference between one representative orientation and the other representative orientation is not more than the third threshold value, the found sub map M3 may be selected as the second sub map. For instance, in the loop route, even if the orientation (representative orientation) of the start point and the orientation (representative orientation) of the end point are almost the same, if the moving distance is more than the third threshold value, the found sub map M3 is selected as the second sub map.

On the other hand, also in the case where the difference between one representative orientation and the other representative orientation of the first sub map and the found sub map M3 is more than the third threshold value, but the moving distance from one representative position to the other representative position is not more than the third threshold value, the found sub map M3 may be selected as second sub map. For instance, the case where the moving body 1 rotates substantially on the spot is also regarded as a loop route, and the found sub map M3 is selected as the second sub map.

In the example illustrated in Fig. 7, for example, if the sub map M3 having the representative point RPₖ₊₇ is selected as the first sub map, the control unit 143 determines that the sub map M3 having the representative point RPₖ₊₃ satisfies the above condition (the sub map M3 in which the moving distance and/or the orientation change of the moving body 1 is more than a predetermined third threshold value determined in advance, with respect to the representative position and/or the representative orientation associated with the first sub map), and selects the same as the second sub map.

Note that the sub map M3 having the representative point RPₖ₊₆ is not selected as the second sub map. It is because although the sub map M3 having the representative point RPₖ₊₆ exists at a position close to the first sub map having the representative point RPₖ₊₇, the moving distance of the moving body 1 from the representative point RPₖ₊₆ to the representative point RPₖ₊₇ is smaller than the third threshold value. On the other hand, the sub map M3 having the representative point RPₖ₊₃ is selected as the second sub map. It is because the sub map M3 having the representative point RPₖ₊₃ exists at a position close to the first sub map having the representative point RPₖ₊₇, and there are a plurality of representative points between the representative position of the sub map M3 having the representative point RPₖ₊₃ and the representative position of the first sub map. In other words, it is because the moving distance of the moving body 1 between the representative position of the sub map M3 having the representative point RPₖ₊₃ and the representative position of the first sub map is more than the third threshold value. Further, as illustrated in Fig. 7, a representative orientation θₖ₊₃ of the moving body 1 at the representative point RPₖ₊₃ is different from a representative orientation θₖ₊₇ of the moving body 1 at the representative point RPₖ₊₇ by almost 180 degrees. In other words, the orientation change of the moving body 1 during movement from the representative point RPₖ₊₃ to the representative point RPₖ₊₇ is more than the third threshold value.

By executing Step S351 to Step S352 described above, the control unit 143 can find a loop route included in the moving route R1 on the basis of the property of the loop route. In addition, the control unit 143 can exactly find the sub map M3 having a relationship in which the representative position and the representative orientation form the loop route.

Note that in Step S351 described above, if it is determined that there is not another sub map M3 within the range of relative distance of a predetermined value or less from the representative point of the first sub map (in the case of "No" in Step S351), the control unit 143 determines that there is no second sub map in a relationship to form a loop route with the first sub map, and finishes the loop detection process. In addition, in Step S352 described above, if it is determined that there is no sub map M3, among the sub maps M3 found in Step S351, in which the moving distance and/or the orientation change of the moving body 1, between the representative position and/or the representative orientation associated with the sub map M3 and the representative position and/or the representative orientation associated with the first sub map, is more than the third threshold value (in the case of "No" in Step S352), the control unit 143 determines that there is no second sub map in the relationship to form a loop route with first sub map, and finishes the loop detection process.

### (7) Successive Loop Determination

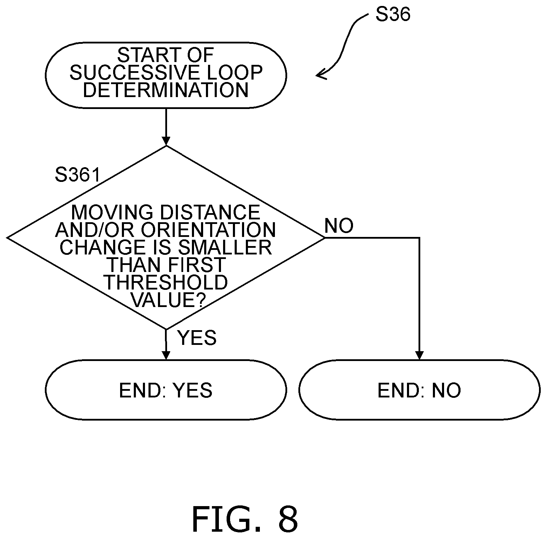

Hereinafter, with reference to Fig. 8, the process performed by the control unit 143 in the successive loop determination is described. Fig. 8 is a flowchart illustrating a process performed in the successive loop determination. Here, the reference passing point and the loop point at which the loop correction was performed last time are respectively referred to as a first reference passing point and a first loop point. In addition, the reference passing point and the loop point detected this time are respectively referred to as a second reference passing point and a second loop point. In the successive loop determination, it is determined whether or not the second reference passing point is successive from the first reference passing point.

The control unit 143 determines whether or not the moving distance and/or the orientation change of the moving body 1, after passing the first reference passing point until reaching the second reference passing point, is smaller than a first threshold value as a first criterion determined in advance (Step S361). If the moving distance and/or the orientation change of the moving body 1, after passing the first reference passing point until reaching the second reference passing point, is smaller than the first threshold value, it means that the first reference passing point and the second reference passing point are successive.

Specifically, for example, the control unit 143 calculates the moving distance of the moving body 1 on the basis of the moving distance from the movement start associated with the first reference passing point and the second reference passing point, and determines whether or not the calculated moving distance is smaller than the first threshold value. In addition, the control unit 143 determines whether or not a difference, between the representative orientation associated with the first reference passing point and the representative orientation associated with the second reference passing point (i.e., the orientation change), is smaller than the first threshold value.

If the moving distance and/or the orientation change of the moving body 1 after passing the first reference passing point until reaching the second reference passing point is smaller than the first threshold value, the control unit 143 determines that the first reference passing point and the second reference passing point are successive ("Yes" in Step S361). On the other hand, if the moving distance and/or the orientation change of the moving body 1 after passing the first reference passing point until reaching the second reference passing point is the first threshold value or more, it is determined that the first reference passing point and the second reference passing point are not successive ("No" in Step S361).

Note that also in the case where the moving distance and/or the orientation change of the moving body 1 after passing the first reference passing point until reaching the second reference passing point is more than the first threshold value, but the orientation change is not more than the first threshold value, it may be determined that the first reference passing point and the second reference passing point are not successive. For instance, even if the orientation (representative orientation) of the first reference passing point and the orientation (representative orientation) of the second reference passing point are almost the same, if the moving distance is more than the first threshold value, it is determined that the first reference passing point and the second reference passing point are not successive.

On the other hand, also in the case where the orientation change of the moving body 1 after passing the first reference passing point until reaching the second reference passing point is more than the first threshold value, but the moving distance is not more than the first threshold value, it may be determined that the first reference passing point and the second reference passing point are not successive. For instance, also in the case where the moving body 1 rotates substantially on the spot, it is determined that the first reference passing point and the second reference passing point are not successive.

In the example illustrated in Fig. 7, for example, if the representative point RPₖ₊₆ is the first reference passing point while the representative point RPₖ₊₇ is the second reference passing point, the control unit 143 determines that the first reference passing point and the second reference passing point are successive. It is because the moving distance of the moving body 1 between the representative point RPₖ₊₆ as the first reference passing point and the representative point RPₖ₊₇ as the second reference passing point is smaller than the first threshold value. Further, as illustrated in Fig. 7, it is because the representative orientation θₖ₊₇ of the moving body 1 at the representative point RPₖ₊₇ is almost the same as the representative orientation θₖ₊₆ of the moving body 1 at the representative point RPₖ₊₆. In other words, it is because the orientation change of the moving body 1 during movement from the representative point RPₖ₊₆ to the representative point RPₖ₊₇ is smaller than the first threshold value.

On the other hand, for example, if the representative point RPₖ₊₆ is the first reference passing point while a representative point RPₖ₊₉ is the second reference passing point, the control unit 143 determines that the first reference passing point and the second reference passing point are not successive. It is because the moving distance of the moving body 1 between the representative point RPₖ₊₆ as the first reference passing point and the representative point RPₖ₊₉ as the second reference passing point is the first threshold value or more.

By executing Step S361 described above, it can be determined whether or not the first reference passing point and the second reference passing point are successive.

### (8) Loop Correction

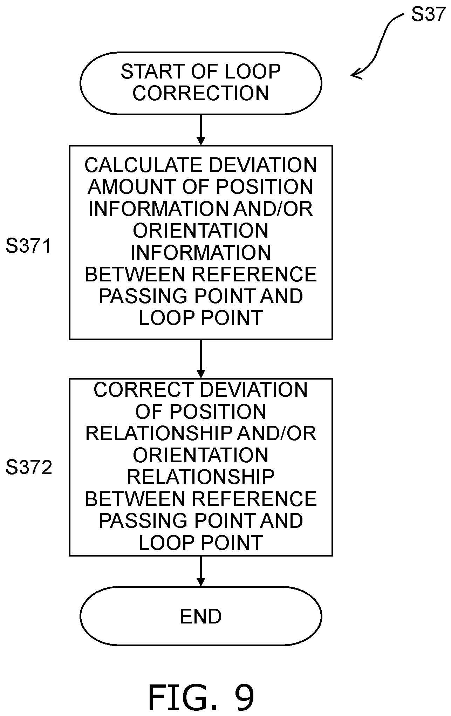

Hereinafter, with reference to Fig. 9, the process performed by the control unit 143 in the loop correction is described. Fig. 9 is a flowchart illustrating a process performed in the loop correction. In the successive loop determination, if it is determined that the first reference passing point and the second reference passing point are not successive, the loop correction is performed. In the loop correction, by correcting the position relationship and/or the orientation relationship between the reference passing point and the loop point, the representative point information associated with the sub map M3 is corrected. Specifically, the following process is performed so as to correct the deviation.

First, the control unit 143 calculates the deviation amount of the position information and/or the orientation information between the reference passing point and the loop point (Step S371). The deviation amount of the position information and/or the orientation information between the reference passing point and the loop point are calculated, on the basis of comparison between the first sub map and the second sub map. Specifically, the deviation amounts of the position information and the orientation information between the reference passing point and the loop point are calculated as a deviation amount, when one of the distance information acquired at the representative positions of the first sub map and the second sub map is relatively shifted from the other, so that the distance information acquired at the representative position of one of the first sub map and the second sub map matches most with the distance information acquired at the other representative position of the first sub map and the second sub map, for example. The control unit 143 calculates the deviation amounts of the position information and the orientation information between the reference passing point and the loop point, by the following process (referred to as scan matching).

First, the control unit 143 places, for example, the distance information acquired at the representative position of the second sub map, on the first sub map, at each of a plurality of candidate positions set in a predetermined area around the representative position of the first sub map. At the candidate position, the control unit 143 rotates the distance information described above by a predetermined angle range, so as to calculate a matching degree between the first sub map and the distance information described above at each rotation angle of each candidate position. In this way, the matching degree between the first sub map and the second sub map (the distance information at the representative positions thereof) is calculated, at each of a plurality of combinations of the candidate position and the rotation angle.

After that, the control unit 143 calculates each difference between each of the candidate position and the rotation angle at which the matching degree between the first sub map and the second sub map (the distance information at the representative positions thereof) becomes maximum, and each of the representative position and the orientation information of the first sub map, so as to set the same as the deviation amounts of the position information and the orientation information between the reference passing point and the loop point.

Note that contrary to the above description, the deviation amount of the position information and/or the orientation information between the reference passing point and the loop point may be calculated as a deviation amount, when the distance information acquired at the representative position of the first sub map is placed on the second sub map, and one of the distance information acquired at the representative positions of the first sub map and the second sub map is relatively shifted from the other, so that the first sub map matches most with the second sub map.

In this way, by calculating the deviation amount of the position information and/or the orientation information between the reference passing point and the loop point, using the distance information indicating the distance to the object existing around the moving body 1, the accurate deviation amount can be calculated. As a result, the position relationship and/or the orientation relationship between the reference passing point and the loop point can be corrected more appropriately.

After calculating the deviation amount of the position information and/or the orientation information between the reference passing point and the loop point, the control unit 143 corrects the position relationship and/or the orientation relationship between the reference passing point and the loop point, on the basis of the calculated deviation amount. In this way, the control unit 143 corrects the representative point information (the representative position and the representative orientation) associated with the sub map M3 (Step S372). In this embodiment, the control unit 143 distributes the deviation amount of the position information and/or the orientation information between the reference passing point and the loop point, to all the sub maps M3 created so far, in addition to the first sub map and the second sub map as targets of comparison this time, so as to correct the position relationship and/or the orientation relationship at the representative point of every sub map M3. This correction can be realized, for example, by performing graph optimization using the nonlinear least-squares method (such as Graph SLAM), on the representative point information of every sub map M3 (the representative position and the representative orientation included therein). In addition, the correction described above can be realized also by other method.

When the moving body 1 creates the environment map M1, as the number of times of correction of the representative point information (the representative position and the representative orientation) associated with the sub map M3 is larger, it is possible to create the environment map M1 that indicates the moving environment ME more appropriately. However, if the moving distance and/or the orientation change of the moving body 1 after passing the first reference passing point until reaching the second reference passing point is smaller than the first threshold value as the first criterion, an error due to wheel slipping, sensor noise, or the like hardly occurs. In this case, the improvement degree of accuracy of the environment map M1 is small when performing the loop correction for the second reference passing point. On the other hand, the calculation time for the correction processing is increased due to execution of the loop correction.

By executing Steps S351 to S352, Step S361, and Steps S371 to S372 described above, the loop route existing in the moving route R1 is found. In addition, it is determined whether or not it is successive from the reference passing point at which the loop correction was performed last time. In addition, if it is not successive from the reference passing point at which the loop correction was performed last time, the position relationship and/or the orientation relationship between the reference passing point and the loop point is corrected. As a result, it is possible to create the environment map M1 indicating the shape of the loop route appropriately. On the other hand, if it is successive from the reference passing point at which the loop correction was performed last time, the position relationship and/or the orientation relationship between the reference passing point and the loop point is not corrected. As a result, calculation time for the correction processing can be reduced.

In addition, the deviation amount of the position information and/or the orientation information between the reference passing point and the loop point is distributed to every sub map M3, so as to correct the position relationship and/or the orientation relationship of every sub map M3, and hence it is possible to correct the position relationship and/or the orientation relationship between a plurality of the sub maps M3, without changing the relative position relationship and/or orientation relationship between the two sub maps M3.

### 2. Second Embodiment

In a second embodiment, the configuration of the moving body 1, the configuration of the control device 14, the schematic operation of the moving body 1, the operation in the manual mode, the adjacent correction, and the operation in the loop correction are the same as those in the first embodiment. For this reason, description of them are omitted here. Hereinafter, operations of the moving body 1 in the second embodiment are described only for configurations different from those in the first embodiment.

### (1) Loop Detection Operation

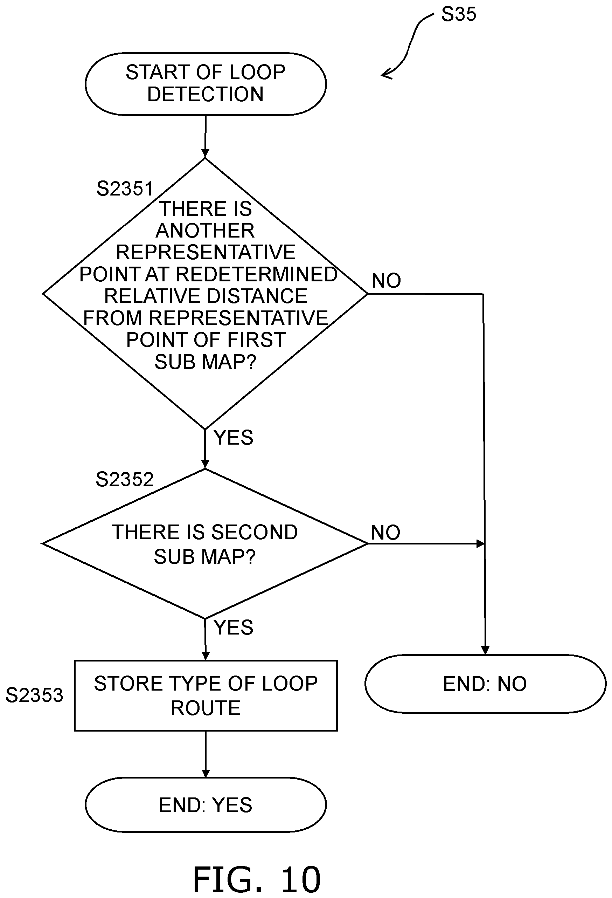

Hereinafter, with reference to Fig. 10, the process performed by the control unit 143 in the loop detection is described. Fig. 10 is a flowchart illustrating a process performed in the loop detection. In the loop detection, on the basis of the representative position and the representative orientation of one sub map M3 (the first sub map), it is determined whether or not there is another sub map M3 (the second sub map) having a relationship where the representative position and the representative orientation form a loop route.

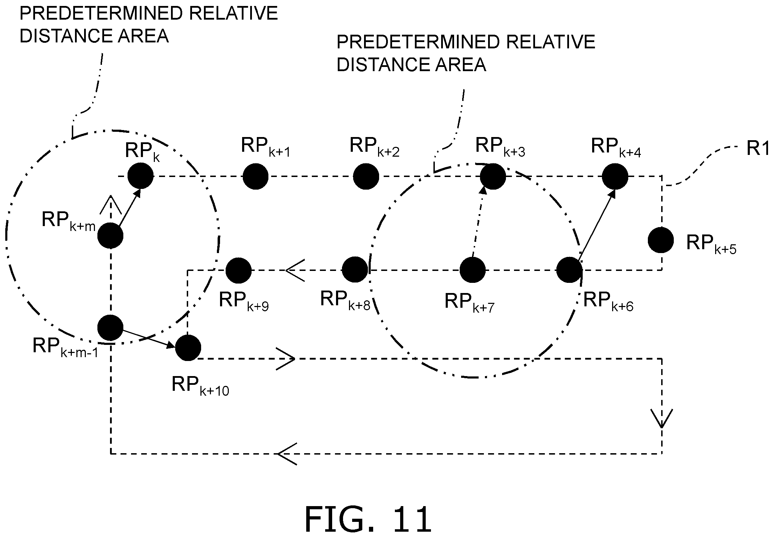

In the following description, as illustrated in Fig. 11, in the moving route R1 that is being taught, the loop detection in the moving route R1 is exemplified and described, in which the representative point RPₖ is the start point, the representative points RPₖ₊₁, RPₖ₊₂, RPₖ₊₃, ... and RPₖ₊ₘ₋₁ are passed from the representative point RPₖ, and the representative point RPₖ₊ₘ is the end point. Note that the representative orientations at the representative points RPₖ, RPₖ₊₁, RPₖ₊₂, ..., RPₖ₊ₘ₋₁, and RPₖ₊ₘ are denoted by θₖ, θₖ₊₁, θₖ₊₂, ..., θₖ₊ₘ₋₁, and θₖ₊ₘ, respectively. In addition, it is supposed that the moving body 1 has traveled along the moving route R1 described above so as to reach the position corresponding to the representative point RPₖ₊ₘ up to the moment. Fig. 11 is a diagram illustrating one example of the moving route R1.

Step S2351 to Step S2352 in Fig. 10 are the same as Step S351 to Step S352 in Fig. 6, and hence detailed description thereof is omitted.

In Step S2351, in the example illustrated in Fig. 11, for example, it is supposed that the sub map M3 having the representative point RPₖ₊ₘ is selected as the first sub map. In this case, the control unit 143 determines that the sub map M3 having the representative point RPₖ and the sub map M3 having the representative point RPₖ₊ₘ₋₁, whose relative distances from the representative point RPₖ₊ₘ are within a predetermined value or less, are candidates of the second sub map.

In Step S2352, in the example illustrated in Fig. 11, for example, in the case where the sub map M3 having the representative point RPₖ₊ₘ is selected as the first sub map, the control unit 143 determines that the sub map M3 having the representative point RPₖ satisfies the condition described above, and selects the same as the second sub map.

If there is the second sub map as described above (in the case of "Yes" in Step S2352), the control unit 143 determines a type of the loop route for the first sub map and the second sub map having the relationship of forming the loop route, and stores the same in the storage unit 141 (Step S2353). Here, the determination of the type of the loop route means, for example, to determine whether the loop route is a "large loop route" or a "small loop route" as described below.

As illustrated in Fig. 11, as the loop route, there is the moving route R1 having a large moving distance of the moving body 1 between the loop point and the reference passing point, like a start point and an end point of a large ring-like loop route, and the moving route R1 having a small moving distance of the moving body 1 between the loop point and the reference passing point, like a vicinity of a curve in a hairpin curve. In the example illustrated in Fig. 11, for example, the control unit 143 determines that the type of the loop route, in which the representative point RPₖ₊₇ is the reference passing point while the representative point RPₖ₊₃ is the loop point, is a "small loop route". It is because the moving distance between the representative point RPₖ₊₃ and the representative point RPₖ₊₇ is smaller than a predetermined threshold value determined in advance (referred to as a fourth threshold value). In addition, for example, the control unit 143 determines that the type of loop route, in which the representative point RPₖ₊ₘ is the reference passing point while the representative point RPₖ is the loop point, is a "large loop route". It is because that the moving distance between the representative point RPₖ and the representative point RPₖ₊ₘ is larger than the fourth threshold value determined in advance. The control unit 143 stores the type of the loop route acquired as described above in the storage unit 141.

By performing Step S2351 to Step S2353 as described above, the control unit 143 can find the loop route included in the moving route R1 on the basis of the property of the loop route. In addition, the control unit 143 can exactly find the sub map M3 having a relationship in which the representative position and the representative orientation form a loop route. In addition, it can determine a type of the loop route.

### (2) Successive Loop Determination

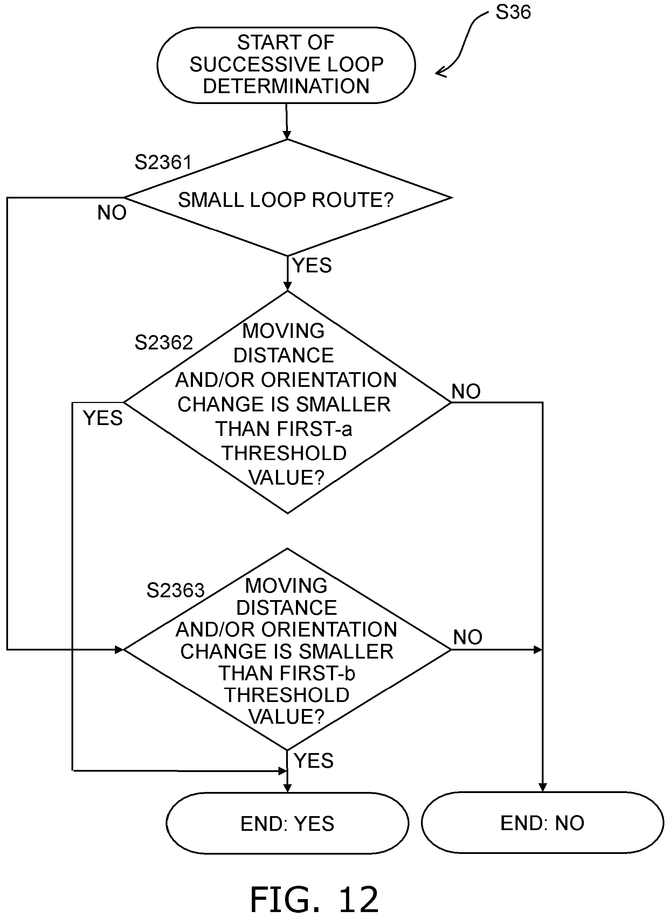

Hereinafter, with reference to Fig. 12, the process performed by the control unit 143 in the successive loop determination is described. Fig. 12 is a flowchart illustrating a process performed in the successive loop determination. Here, it is supposed that the reference passing point at which the loop correction was performed last time is the first reference passing point while the loop point is the first loop point. In addition, it is supposed that the reference passing point detected this time is the second reference passing point while the loop point is the second loop point. In the successive loop determination, it is determined whether or not the second reference passing point is successive from the first reference passing point.

The control unit 143 determines whether or not the second reference passing point and the second loop point is a small loop route on the basis of the type of the loop route stored in the storage unit 141 (Step S2361).

If it is determined that the second reference passing point and the second loop point is a small loop route (in the case of "Yes" in Step S2361), the control unit 143 determines whether or not the moving distance and/or the orientation change of the moving body 1 after passing the first reference passing point until reaching the second reference passing point is smaller than a first-a threshold value as the first criterion determined in advance (Step S2362). If the moving distance and/or the orientation change of the moving body 1 after passing the first reference passing point until reaching the second reference passing point is smaller than the first-a threshold value, it means that the first reference passing point and the second reference passing point are successive.

Specifically, for example, the control unit 143 calculates the moving distance of the moving body 1 on the basis of the moving distance from the movement start associated with the first reference passing point and the second reference passing point, and determines whether or not the calculated moving distance is smaller than the first-a threshold value. In addition, the control unit 143 determines whether or not a difference between the representative orientation associated with the first reference passing point and the representative orientation associated with the second reference passing point (i.e., the orientation change) is smaller than the first-a threshold value.

If the moving distance and/or the orientation change of the moving body 1 after passing the first reference passing point until reaching the second reference passing point is smaller than the first-a threshold value, the control unit 143 determines that the first reference passing point and the second reference passing point are successive ("Yes" in Step S2362). On the other hand, if the moving distance and/or the orientation change of the moving body 1 after passing the first reference passing point until reaching the second reference passing point is the first-a threshold value or more, it is determined that the first reference passing point and the second reference passing point are not successive ("No" in Step S2362).

On the other hand, if it is determined that the second reference passing point and the second loop point is not a small loop route (in the case of "No" in Step S2361), the control unit 143 determines whether or not the moving distance and/or the orientation change of the moving body 1 after passing the first reference passing point until reaching the second reference passing point is smaller than a first-b threshold value as the first criterion determined in advance (Step S2363). If the moving distance and/or the orientation change of the moving body 1 after passing the first reference passing point until reaching the second reference passing point is smaller than the first-b threshold value, it means that the first reference passing point and the second reference passing point are successive.

Specifically, for example, the control unit 143 calculates the moving distance of the moving body 1 on the basis of the moving distance from the movement start associated with the first reference passing point and the second reference passing point, and determines whether or not the calculated moving distance is smaller than the first-b threshold value. In addition, the control unit 143 determines whether or not a difference between the representative orientation associated with the first reference passing point and the representative orientation associated with the second reference passing point (i.e., the orientation change) is smaller than the first-b threshold value.

If the moving distance and/or the orientation change of the moving body 1 after passing the first reference passing point until reaching the second reference passing point is smaller than the first-b threshold value, the control unit 143 determines that the first reference passing point and the second reference passing point are successive ("Yes" in Step S2363). On the other hand, if the moving distance and/or the orientation change of the moving body 1 after passing the first reference passing point until reaching the second reference passing point is the first-b threshold value or more, it is determined that the first reference passing point and the second reference passing point are not successive ("No" in Step S2363).

Note that the first-a threshold value that is used for the successive loop determination of a small loop route is larger than the first-b threshold value that is used for the successive loop determination of a large loop route. Compared with the large loop route, the small loop route has a smaller moving distance of the moving body 1 between the loop point and the reference passing point, and hence an error due to wheel slipping, sensor noise, or the like hardly occurs for an estimated own position. For this reason, by setting the first-a threshold value that is used for the successive loop determination of a small loop route to be larger than the first-b threshold value, the number of times of performing the loop correction can be reduced, and calculation time for the correction processing can be reduced. On the other hand, in the large loop route, the moving distance of the moving body 1 between the loop point and the reference passing point is large, and hence an error due to wheel slipping, sensor noise, or the like easily occurs for an estimated own position. For this reason, by setting the first-b threshold value that is used for the successive loop determination of a large loop route to be smaller than the first-a threshold value, it is possible to create the environment map M1 indicating the moving environment ME appropriately.

In the example illustrated in Fig. 11, for example, the type of the loop route, in which the representative point RPₖ₊₇ is the reference passing point while the representative point RPₖ₊₃ is the loop point, is a "small loop route". In this case, supposing that the representative point RPₖ₊₆ is the first reference passing point while the representative point RPₖ₊₇ is the second reference passing point, the control unit 143 determines that the first reference passing point and the second reference passing point are successive. It is because the moving distance of the moving body 1 between the representative point RPₖ₊₆ as the first reference passing point and the representative point RPₖ₊₇ as the second reference passing point is smaller than the first-a threshold value. Further, as illustrated in Fig. 11, the representative orientation θₖ₊₇ of the moving body 1 at the representative point RPₖ₊₇ is almost the same as the representative orientation θₖ₊₆ of the moving body 1 at the representative point RPₖ₊₆. In other words, it is because the orientation change of the moving body 1 during the movement from the representative point RPₖ₊₆ to the representative point RPₖ₊₇ is smaller than the first-a threshold value.

On the other hand, for example, the type of the loop route, in which the representative point RPₖ₊ₘ is the reference passing point while the representative point RPₖ is the loop point, is a "large loop route". In this case, supposing that the representative point RPₖ₊ₘ₋₁ is the first reference passing point while the representative point RPₖ₊ₘ is the second reference passing point, the control unit 143 determines that the first reference passing point and the second reference passing point are not successive. It is because the moving distance of the moving body 1 between the representative point RPₖ₊ₘ₋₁ as the first reference passing point and the representative point RPₖ₊ₘ as the second reference passing point is larger than the first-b threshold value.

By performing Step S2361 to Step S2363 described above, it can be determined whether or not the first reference passing point and the second reference passing point are successive, on the basis of the first criterion set in advance for each of the small loop route and the large loop route.

### 3. Variations of Embodiment

Although one embodiment of the present invention is described above, the present invention is not limited to the embodiment described above, but can be variously modified within the scope of the invention without deviating from the spirit thereof. In particular, a plurality of embodiments and variations described in this specification can be arbitrarily combined as necessary.
(A) The processing order of the steps, and/or the processing content of each step illustrated in the flowchart of Fig. 3 to Fig. 6, Fig. 8 to Fig. 10, or Fig. 11 can be appropriately changed within the scope of the invention without deviating from the spirit thereof.
(B) The map creation device in the first embodiment and the second embodiment creates the sub map M3 on the basis of the predetermined number of local maps M2, but it may not create the sub map M3. In this case, the local map M2 may be used instead of the sub map M3 in the map creation device described above. The representative point is a passing point of the local map M2, and the representative point information is the position information and the orientation information of the passing point. In this way, calculation time can be reduced for creation of the sub map M3.
(C) In the successive loop determination of the first embodiment, it is determined whether or not the moving distance and/or the orientation change of the moving body 1, after passing the first reference passing point until reaching the second reference passing point, is smaller than the first threshold value as the first criterion. However, in the successive loop determination, it may be determined whether or not the elapsed time after the moving body 1 passes the first reference passing point until it reaches the second reference passing point is smaller than the second threshold value as the second criterion. In this case, in Step S32 of Fig. 4, the elapsed time from the movement start may be stored as the passing point information in the storage unit 141. In this way, without strictly calculating the moving distance and the orientation change, it can be handled as an index for determining whether or not there is a loop, easily with smaller calculation amount.

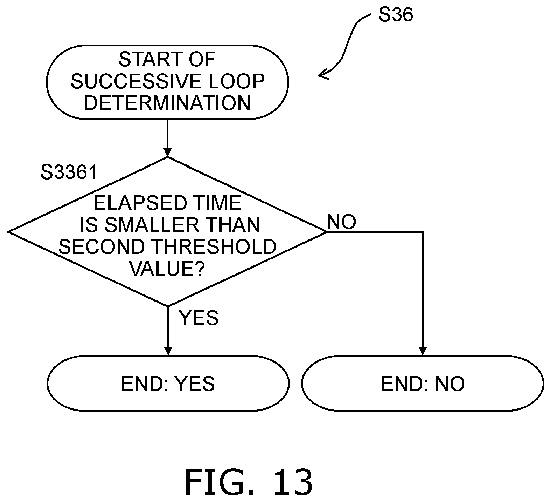

Fig. 13 is a flowchart illustrating a process performed in the successive loop determination. The control unit 143 determines whether or not the elapsed time, after the moving body 1 passes the first reference passing point until reaching the second reference passing point, is smaller than the second threshold value as the second criterion (Step S3361).

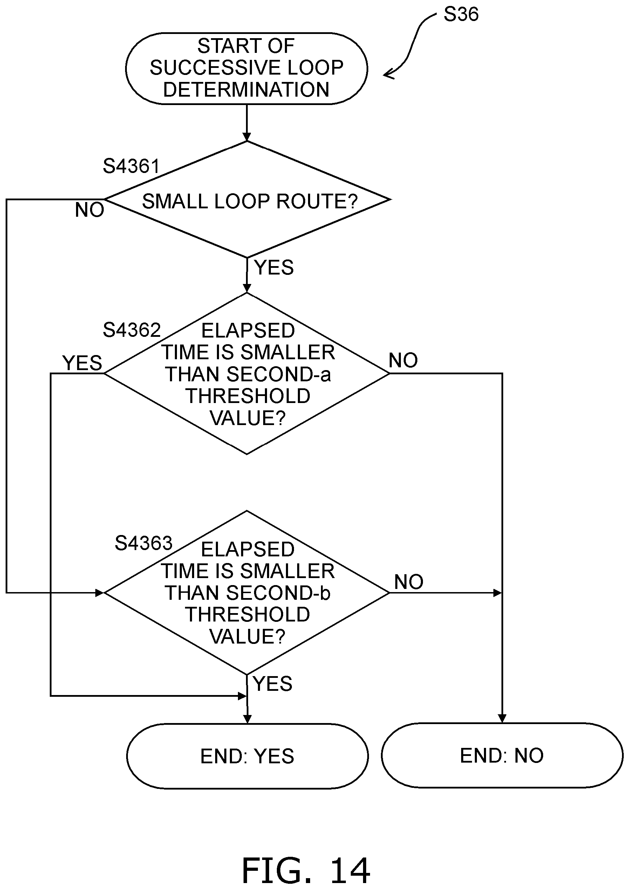

(D) In the successive loop determination of the second embodiment, if the second reference passing point and the second loop point is a small loop route, it is determined whether or not the moving distance and/or the orientation change of the moving body 1, after passing the first reference passing point until reaching the second reference passing point, is smaller than the first-a threshold value as the first criterion. In addition, if the second reference passing point and the second loop point is a large loop route, it is determined whether or not the moving distance and/or the orientation change of the moving body 1, after passing the first reference passing point until reaching the second reference passing point, is smaller than the first-b threshold value as the first criterion. However, as illustrated in Fig. 14, in the successive loop determination, it may be determined whether or not the elapsed time, after the moving body 1 passes the first reference passing point until reaching the second reference passing point, is smaller than a second-a threshold value or a second-b threshold value as the second criterion. In this case, in Step S32 of Fig. 4, the elapsed time from the movement start may be stored as the passing point information in the storage unit 141. In this way, without strictly calculating the moving distance and the orientation change, it can be handled as an index for determining whether or not there is a loop, easily with smaller calculation amount.

Fig. 14 is a flowchart illustrating a process performed in the successive loop determination. Step S4361 is the same as Step S2361 of Fig. 12, and hence the description thereof is omitted. If the second reference passing point and the second loop point is a small loop route, it is determined whether or not the elapsed time, after the moving body 1 passes the first reference passing point until reaching the second reference passing point, is smaller than the second-a threshold value as the second criterion (Step S4362). In addition, if the second reference passing point and the second loop point is a large loop route, it is determined whether or not the elapsed time, after the moving body 1 passes the first reference passing point until reaching the second reference passing point, is smaller than the second-b threshold value as the second criterion (Step S4363).

(E) The successive loop determination of the first embodiment may be performed in accordance with the first criterion and/or the second criterion described in the above (C). The successive loop determination of the second embodiment may be performed in accordance with the first criterion and/or the second criterion described in the above (D). By combining the moving distance and/or the orientation change as the first criterion and the elapsed time as the second criterion, so as to perform the determination, it can be determined more appropriately whether or not the first reference passing point and the second reference passing point are successive.

(F) In the map creation device of the first embodiment and the second embodiment, a part or the whole of the functions of the control unit 143 (e.g., the own position estimation function, the sub map creation function, the adjacent correction function, the loop detection function, the successive loop determination function, the loop correction function, and the environment map creation function) may be realized by another control device (system) connected to the moving body 1 by a physical or another means. In this way, for example, after finishing the movement for teaching the moving body 1, a control device (system) other than the moving body 1 can perform the own position estimation, the sub map creation, the adjacent correction, the loop detection, the successive loop determination, the loop correction, and the environment map creation.

(G) The map creation device of the second embodiment may change details of the correction processing, between the case where the second reference passing point and the second loop point is a small loop route and the case where the same is a large loop route. Specifically, for example, when performing the loop correction of a small loop route, granularity of data is set to be low, and/or the predetermined area for scan matching is set to be small. For instance, when performing the loop correction of a large loop route, the granularity of data is set to be high, and/or the predetermined area for scan matching is set to be large.

In the example illustrated in Fig. 11, for example, when correcting the position relationship and/or the orientation relationship between the reference passing point and the loop point for a small loop route, in which the representative point RPₖ₊₆ is the reference passing point while the representative point RPₖ₊₄ is the loop point, the moving distance of the moving body 1 between the loop point and the reference passing point is small, and hence an error due to wheel slipping, sensor noise, or the like hardly occurs for an estimated own position. For this reason, even if the granularity of data is set to be low in the loop correction, it is possible to create the environment map M1 indicating the moving environment ME appropriately. By setting the granularity of data to be low, calculation time for the correction processing can be reduced. On the other hand, when correcting the position relationship and/or the orientation relationship between the reference passing point and the loop point for a large loop route, in which the representative point RPₖ₊ₘ is the reference passing point while the representative point RPₖ is the loop point, the moving distance of the moving body 1 between the loop point and the reference passing point is large, and hence an error due to wheel slipping, sensor noise, or the like easily occurs for an estimated own position. For this reason, by setting the granularity of data to be high in the loop correction, it is possible to create the environment map M1 indicating the moving environment ME appropriately.

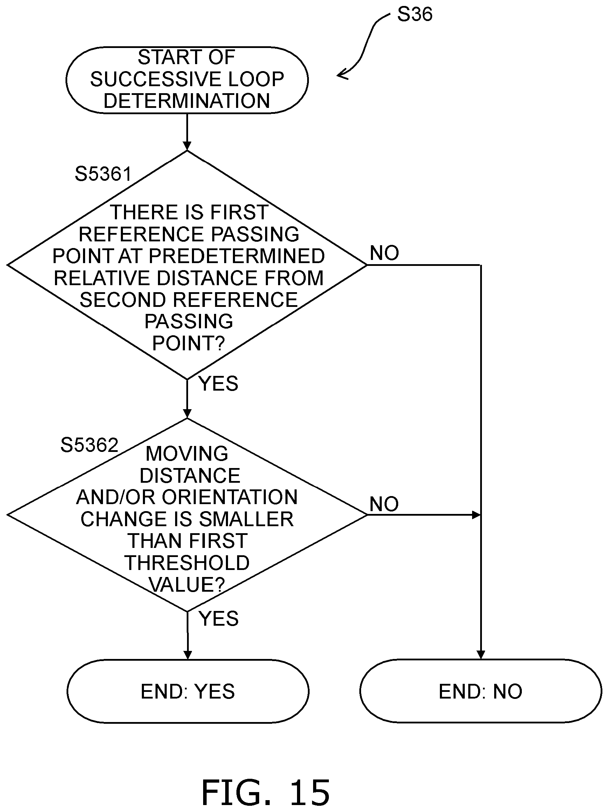

(H) In the successive loop determination of the first embodiment, it is determined whether or not the second reference passing point detected this time is successive from the first reference passing point at which the loop correction was performed last time. However, in the successive loop determination, it may be determined whether or not the second reference passing point detected this time is successive from one or more reference passing points at which the loop correction was performed until last time. Fig. 15 is a flowchart illustrating a process performed in the successive loop determination.

The control unit 143 determines whether or not there is a reference passing point at which the loop correction was performed until last time, in a predetermined relative distance from the second reference passing point (Step S5361).

One of the reference passing points at which the loop correction was performed until last time, which was found in Step S5361, is set as the first reference passing point. The control unit 143 determines whether or not the moving distance and/or the orientation change of the moving body 1, after passing the first reference passing point until reaching the second reference passing point, is smaller than the first threshold value as the first criterion determined in advance (Step S5362). If the moving distance and/or the orientation change of the moving body 1 after passing the first reference passing point until reaching the second reference passing point is smaller than the first threshold value, it means that the first reference passing point and the second reference passing point are successive.

If the moving distance and/or the orientation change of the moving body 1 after passing the first reference passing point until reaching the second reference passing point is smaller than the first threshold value, the control unit 143 determines that the first reference passing point and the second reference passing point are successive ("Yes" in Step S5362). On the other hand, if the moving distance and/or the orientation change of the moving body 1 after passing the first reference passing point until reaching the second reference passing point is the first threshold value or more, it is determined that the first reference passing point and the second reference passing point are not successive ("No" in Step S5362).

By performing Step S5361 to Step S5362 described above, the control unit 143 can determine whether or not any one of the reference passing points at which the loop correction was performed until last time is successive to the second reference passing point. As a result, calculation time for the correction processing can be further reduced.

(I) In the first embodiment and the second embodiment, the creation of the environment map M1 in the manual mode is described. However, the creation of the environment map M1 in the first embodiment and the second embodiment can also be applied to a case where the traveling schedule TS in the manual mode is taught so that the environment map M1 is created, or a case where the moving body 1 records positions of objects in the moving environment ME during autonomous movement, so as to create the environment map M1.

### 4. Features of Embodiment

The feature of the embodiment described above can also be described as follows.
(1) The map creation device (e.g., the control device 14) includes the storage unit 141 and the control unit 143. The storage unit 141 stores position information as a position of the moving body 1, orientation information indicating an orientation of the moving body 1 at the position, and the local map M2 indicating a positional state of objects existing around the moving body 1, in association with each other, at a plurality of passing points the moving body 1 passes during movement from the first position to the second position.

The control unit 143 detects the first loop point, which is in proximity to the first reference passing point as one of the passing points, and which is another passing point at which the moving distance and/or the orientation change of the moving body 1 is more than the predetermined threshold value, with respect to the position information and/or the orientation information associated with the first reference passing point.

The fact that the point is in proximity to the first reference passing point, and that the moving distance and/or the orientation change of the moving body 1 is more than the predetermined threshold value, with respect to the position information and/or the orientation information associated with the first reference passing point, means that the route in which the moving body 1 has moved is a route for returning from a specific point to a point in proximity to the point after traveling a predetermined distance (referred to as a loop route).

The control unit 143 calculates a first deviation amount of the position information and/or the orientation information, on the basis of comparison between the information associated with the first reference passing point and the information associated with the first loop point. The control unit 143 corrects a position relationship and/or an orientation relationship between the first reference passing point and the first loop point, on the basis of the first deviation amount.

When the control unit 143 detects a second loop point, which is in proximity to a second reference passing point as one of the passing points after the first reference passing point, and which is another passing point at which the moving distance and/or the orientation change of the moving body 1 is more than a predetermined threshold value, with respect to the position information and/or the orientation information associated with the second reference passing point, it determines whether or not to correct the position relationship and/or the orientation relationship between the second reference passing point and the second loop point.

The fact that the point is in proximity to the second reference passing point, and that the moving distance and/or the orientation change of the moving body 1 at the point is more than a predetermined threshold value, with respect to the position information and/or the orientation information associated with the second reference passing point, means that the route in which the moving body 1 has moved is a route for returning from a specific point to a point in proximity to the point after traveling a predetermined distance (referred to as a loop route).

When determining to correct, the control unit 143 calculates a second deviation amount of the position information and/or the orientation information, on the basis of comparison between the second reference passing point and the second loop point, and corrects the position relationship and/or the orientation relationship between the second reference passing point and the second loop point, on the basis of the second deviation amount.

In this control device 14, it is determined whether or not to correct the position relationship and/or the orientation relationship between the second reference passing point and the second loop point, for the second reference passing point. When the control unit 143 determines to perform the correction, the position relationship and/or the orientation relationship between the second reference passing point and the second loop point is corrected. As a result, calculation time for the correction processing can be reduced.

(2) In the control device 14 of the above (1), the control unit 143 determines whether or not to correct the position relationship and/or the orientation relationship between the second reference passing point and the second loop point, on the basis of the first criterion. The first criterion is based on the moving distance and/or the orientation change of the moving body 1 after passing the first reference passing point until reaching the second reference passing point.

In this control device 14, the position relationship and/or the orientation relationship between the second reference passing point and the second loop point is corrected, only in the case where it is determined to correct on the basis of the first criterion. As a result, calculation time for the correction processing can be reduced.

(3) In the control device 14 of the above (1) or (2), the control unit 143 determines whether or not to correct the position relationship and/or the orientation relationship between the second reference passing point and the second loop point, on the basis of the second criterion. The second criterion is based on elapsed time after the moving body 1 passes the first reference passing point until reaching the second reference passing point.

In this control device 14, only in the case where it is determined to correct on the basis of the second criterion, the position relationship and/or the orientation relationship between the second reference passing point and the second loop point is corrected. As a result, calculation time for the correction processing can be reduced.

(4) In the control device 14 of any one of the above (1) to (3), as the first criterion, at least two steps of threshold values are set.

As the loop route, there is a loop route having a large moving distance of the moving body 1 after passing the first reference passing point until reaching the second reference passing point, like a start point and an end point of a large ring-like loop route, and a loop route having a small moving distance of the moving body 1 after passing the first reference passing point until reaching the second reference passing point, like a vicinity of a curve in a hairpin curve. Compared with the large loop route, the small loop route has a small moving distance of the moving body 1 between the loop point and the reference passing point, and hence an error due to wheel slipping, sensor noise, or the like hardly occurs for an estimated own position.

In this control device 14, by setting two steps of threshold values, the position relationship and/or the orientation relationship between the second reference passing point and the second loop point can be appropriately corrected, in accordance with a shape of the loop route.

(5) In the control device 14 of any one of the above (1) to (4), as the second criterion, at least two steps of threshold values are set.

In this control device 14, by setting two steps of threshold values, the position relationship and/or the orientation relationship between the second reference passing point and the second loop point can be appropriately corrected, in accordance with the shape of the loop route.

(6) In the control device 14 of any one of the above (1) to (5), the control unit 143 determines whether or not to correct the position relationship and/or the orientation relationship between the second reference passing point and the second loop point, in accordance with the first criterion and/or the second criterion.

In this control device 14, it is determined whether or not to correct the position relationship and/or the orientation relationship between the second reference passing point and the second loop point, by combining the first criterion and the second criterion. As a result, the position relationship and/or the orientation relationship between the second reference passing point and the second loop point can be appropriately corrected.

(7) In the control device 14 of any one of the above (1) to (6), the control unit 143 determines not to correct the position relationship and/or the orientation relationship between the second reference passing point and the second loop point, if the moving distance and/or the orientation change of the moving body 1 after passing the first reference passing point until reaching the second reference passing point is smaller than a first threshold value set as the first criterion, and/or if the elapsed time after the moving body 1 passes the first reference passing point until reaching the second reference passing point is smaller than a second threshold value set as the second criterion.

In this control device 14, calculation time for the correction processing can be reduced.

(8) The map creation method is a method for creating the environment map M1 when the moving body 1 has moved from the first position to the second position in the moving environment ME. The map creation method includes the steps of:
(a) storing position information as a position of the moving body 1, orientation information indicating an orientation of the moving body 1 at the position, and the local map M2 indicating a positional state of objects existing around the moving body 1, in association with each other, at a plurality of passing points the moving body 1 passes during movement from the first position to the second position;
(b) detecting a first loop point, which is in proximity to a first reference passing point as one of the passing points, and which is another passing point at which a moving distance and/or an orientation change of the moving body 1 is more than a predetermined threshold value, with respect to the position information and/or the orientation information associated with the first reference passing point;
(c) calculating a first deviation amount of the position information and/or the orientation information, on the basis of comparison between the information associated with the first reference passing point and the information associated with the first loop point;
(d) correcting a position relationship and/or an orientation relationship between the first reference passing point and the first loop point on the basis of the first deviation amount;
(e) determining whether or not to correct the position relationship and/or the orientation relationship between a second reference passing point and a second loop point, when detecting the second loop point, which is in proximity to the second reference passing point as one of the passing points after the moving body 1 passes the first reference passing point, and which is another passing point at which a moving distance and/or an orientation change of the moving body 1 is more than a predetermined threshold value, with respect to the position information and/or the orientation information associated with the second reference passing point;
(f) calculating a second deviation amount of the position information and/or the orientation information, on the basis of comparison between the second reference passing point and the second loop point, when determining to correct; and
(g) correcting the position relationship and/or the orientation relationship between the second reference passing point and the second loop point, on the basis of the second deviation amount.

In this map creation method, it is determined whether or not to correct the position relationship and/or the orientation relationship between the second reference passing point and the second loop point, for the second reference passing point. When determining to correct, the position relationship and/or the orientation relationship between the second reference passing point and the second loop point is corrected. As a result, calculation time for the correction processing can be reduced.

(9) In the map creation method of the above (8), the step of determining whether or not to correct further includes the step of:
(h) determining whether or not to correct the position relationship and/or the orientation relationship between the second reference passing point and the second loop point, on the basis of a first criterion.

The first criterion is based on the moving distance and/or the orientation change of the moving body 1 after passing the first reference passing point until reaching the second reference passing point.

In this map creation method, only in the case where it is determined to correct on the basis of the first criterion, the position relationship and/or the orientation relationship between the second reference passing point and the second loop point is corrected. As a result, calculation time for the correction processing can be reduced.

(10) In the map creation method of the above (8) or (9), the step of determining whether or not to correct further includes the step of:
(i) determining whether or not to correct the position relationship and/or the orientation relationship between the second reference passing point and the second loop point, on the basis of a second criterion.

The second criterion is based on elapsed time after the moving body 1 passes the first reference passing point until reaching the second reference passing point.

In this map creation method, only in the case where it is determined to correct on the basis of the second criterion, the position relationship and/or the orientation relationship between the second reference passing point and the second loop point is corrected. As a result, calculation time for the correction processing can be reduced.

(11) In the map creation method of any one of the above (8) to (10), as the first criterion, at least two steps of threshold values are set.

As the loop route, there is a loop route having a large moving distance of the moving body 1 after passing the first reference passing point until reaching the second reference passing point, like a start point and an end point of a large ring-like loop route, and a loop route having a small moving distance of the moving body 1 after passing the first reference passing point until reaching the second reference passing point, like a vicinity of a curve in a hairpin curve. Compared with the large loop route, the small loop route has a small moving distance of the moving body 1 between the loop point and the reference passing point, and hence an error due to wheel slipping, sensor noise, or the like hardly occurs for an estimated own position.

In this map creation method, by setting two steps of threshold values, the position relationship and/or the orientation relationship between the second reference passing point and the second loop point can be appropriately corrected, in accordance with a shape of the loop route.

(12) In the map creation method of any one of the above (8) to (11), as the second criterion, at least two steps of threshold values are set.

In this map creation method, by setting two steps of threshold values, the position relationship and/or the orientation relationship between the second reference passing point and the second loop point can be appropriately corrected, in accordance with the shape of the loop route.

(13) In the map creation method of any one of the above (8) to (12), the step of determining whether or not to correct further includes the step of:
(j) determining whether or not to correct the position relationship and/or the orientation relationship between the second reference passing point and the second loop point, in accordance with the first criterion and/or the second criterion.

In this map creation method, it is determined whether or not to correct the position relationship and/or the orientation relationship between the second reference passing point and the second loop point, by combining the first criterion and the second criterion. In this way, the position relationship and/or the orientation relationship between the second reference passing point and the second loop point can be corrected appropriately.

(14) In the map creation method of any one of the above (8) to (13), the step of determining whether or not to correct further includes the step of:
(k) determining not to correct the position relationship and/or the orientation relationship between the second reference passing point and the second loop point, if the moving distance and/or the orientation change of the moving body 1 after passing the first reference passing point until reaching the second reference passing point is smaller than a first threshold value set as the first criterion, and/or if the elapsed time after the moving body 1 passes the first reference passing point until reaching the second reference passing point is smaller than a second threshold value set as the second criterion.

In this map creation method, calculation time for the correction processing can be reduced.

### INDUSTRIAL APPLICABILITY

The present invention can be widely applied to a map creation device and a map creation method for creating a map indicating a moving environment in which a moving body moves.

### REFERENCE SIGNS LIST

1: moving body
11: main body
12: moving unit
121a, 121b: motor
123a, 123b: wheel
125a, 125b: encoder
13: laser range sensor
131: first laser range sensor
133: second laser range sensor
14: control device
141: storage unit
143: control unit
15: auxiliary wheel unit
15a, 15b: auxiliary wheel
M1: environment map
M2: local map
M3: sub map
ME: moving environment
TS: traveling schedule

## Claims

1. A map creation device for creating an environment map when the moving body has moved from a first position to a second position in a moving environment, the device comprising:
a storage unit configured to store position information as a position of the moving body, orientation information indicating an orientation of the moving body at the position, and a local map indicating a positional state of objects existing around the moving body, in association with each other, at a plurality of passing points the moving body passes during movement from the first position to the second position; and
a control unit, wherein
the control unit detects a first loop point, which is in proximity to a first reference passing point as one of the passing points, and which is another passing point at which a moving distance and/or an orientation change of the moving body is more than a predetermined threshold value, with respect to the position information and/or the orientation information associated with the first reference passing point,
the control unit calculates a first deviation amount of the position information and/or the orientation information, on the basis of comparison between the information associated with the first reference passing point and the information associated with the first loop point,
the control unit corrects a position relationship and/or an orientation relationship between the first reference passing point and the first loop point, on the basis of the first deviation amount,
when the control unit detects a second loop point, which is in proximity to a second reference passing point as one of the passing points after the first reference passing point, and which is another passing point at which a moving distance and/or an orientation change of the moving body is more than a predetermined threshold value, with respect to the position information and/or the orientation information associated with the second reference passing point, the control unit determines whether or not to correct the position relationship and/or the orientation relationship between the second reference passing point and the second loop point, and
when determining to correct, the control unit calculates a second deviation amount of the position information and/or the orientation information, on the basis of comparison between the second reference passing point and the second loop point, and corrects the position relationship and/or the orientation relationship between the second reference passing point and the second loop point, on the basis of the second deviation amount.

2. The map creation device according to claim 1, wherein
the control unit determines whether or not to correct the position relationship and/or the orientation relationship between the second reference passing point and the second loop point, on the basis of a first criterion, and
the first criterion is based on the moving distance and/or the orientation change of the moving body after passing the first reference passing point until reaching the second reference passing point.

3. The map creation device according to claim 1 or 2, wherein
the control unit determines whether or not to correct the position relationship and/or the orientation relationship between the second reference passing point and the second loop point, on the basis of a second criterion, and
the second criterion is based on elapsed time after the moving body passes the first reference passing point until reaching the second reference passing point.

4. The map creation device according to claim 2, wherein at least two steps of threshold values are set as the first criterion.

5. The map creation device according to claim 3, wherein at least two steps of threshold values are set as the second criterion.

6. The map creation device according to claim 1, wherein
the control unit determines whether or not to correct the position relationship and/or the orientation relationship between the second reference passing point and the second loop point, in accordance with a first criterion and/or a second criterion,
the first criterion is based on the moving distance and/or the orientation change of the moving body after passing the first reference passing point until reaching the second reference passing point, and
the second criterion is based on elapsed time after the moving body passes the first reference passing point until reaching the second reference passing point.

7. The map creation device according to claim 1, wherein
a first criterion is based on the moving distance and/or the orientation change of the moving body after passing the first reference passing point until reaching the second reference passing point,
a second criterion is based on elapsed time after the moving body passes the first reference passing point until reaching the second reference passing point, and
the control unit determines not to correct the position relationship and/or the orientation relationship between the second reference passing point and the second loop point, if the moving distance and/or the orientation change of the moving body after passing the first reference passing point until reaching the second reference passing point is smaller than a first threshold value set as the first criterion, and if the elapsed time after the moving body passes the first reference passing point until reaching the second reference passing point is smaller than a second threshold value set as the second criterion.

8. The map creation device according to claim 1, wherein
a first criterion is based on the moving distance and/or the orientation change of the moving body after passing the first reference passing point until reaching the second reference passing point,
a second criterion is based on elapsed time after the moving body passes the first reference passing point until reaching the second reference passing point, and
the control unit determines not to correct the position relationship and/or the orientation relationship between the second reference passing point and the second loop point, if the moving distance and/or the orientation change of the moving body after passing the first reference passing point until reaching the second reference passing point is smaller than a first threshold value set as the first criterion, or if the elapsed time after the moving body passes the first reference passing point until reaching the second reference passing point is smaller than a second threshold value set as the second criterion.

9. A map creation method for creating an environment map when the moving body has moved from a first position to a second position in a moving environment, the method comprising the steps of:
storing position information as a position of the moving body, orientation information indicating an orientation of the moving body at the position, and a local map indicating a positional state of objects existing around the moving body, in association with each other, at a plurality of passing points the moving body passes during movement from the first position to the second position;
detecting a first loop point, which is in proximity to a first reference passing point as one of the passing points, and which is another passing point at which a moving distance and/or an orientation change of the moving body is more than a predetermined threshold value, with respect to the position information and/or the orientation information associated with the first reference passing point;
calculating a first deviation amount of the position information and/or the orientation information, on the basis of comparison between the information associated with the first reference passing point and the information associated with the first loop point;
correcting a position relationship and/or an orientation relationship between the first reference passing point and the first loop point, on the basis of the first deviation amount;
determining whether or not to correct the position relationship and/or the orientation relationship between a second reference passing point and a second loop point, when detecting the second loop point, which is in proximity to the second reference passing point as one of the passing points after the first reference passing point, and which is another passing point at which a moving distance and/or an orientation change of the moving body is more than a predetermined threshold value, with respect to the position information and/or the orientation information associated with the second reference passing point;
calculating a second deviation amount of the position information and/or the orientation information, on the basis of comparison between the second reference passing point and the second loop point, when determining to correct; and
correcting the position relationship and/or the orientation relationship between the second reference passing point and the second loop point, on the basis of the second deviation amount.

10. The map creation method according to claim 9, wherein
the step of determining whether or not to correct includes the step of determining whether or not to correct the position relationship and/or the orientation relationship between the second reference passing point and the second loop point, on the basis of a first criterion, and
the first criterion is based on the moving distance and/or the orientation change of the moving body after passing the first reference passing point until reaching the second reference passing point.

11. The map creation method according to claim 9 or 10, wherein
the step of determining whether or not to correct includes the step of determining whether or not to correct the position relationship and/or the orientation relationship between the second reference passing point and the second loop point, on the basis of a second criterion, and
the second criterion is based on elapsed time after the moving body passes the first reference passing point until reaching the second reference passing point.

12. The map creation method according to claim 10, wherein at least two steps of threshold values are set as the first criterion.

13. The map creation method according to claim 11, wherein at least two steps of threshold values are set as the second criterion.

14. The map creation method according to claim 9, wherein
the step of determining whether or not to correct includes the step of determining whether or not to correct the position relationship and/or the orientation relationship between the second reference passing point and the second loop point, in accordance with a first criterion and/or a second criterion,
the first criterion is based on the moving distance and/or the orientation change of the moving body after passing the first reference passing point until reaching the second reference passing point, and
the second criterion is based on elapsed time after the moving body passes the first reference passing point until reaching the second reference passing point.

15. The map creation method according to claim 9, wherein
a first criterion is based on the moving distance and/or the orientation change of the moving body after passing the first reference passing point until reaching the second reference passing point,
a second criterion is based on elapsed time after the moving body passes the first reference passing point until reaching the second reference passing point, and
the step of determining whether or not to correct includes the step of determining not to correct the position relationship and/or the orientation relationship between the second reference passing point and the second loop point, if the moving distance and/or the orientation change of the moving body after passing the first reference passing point until reaching the second reference passing point is smaller than a first threshold value set as the first criterion, and if the elapsed time after the moving body passes the first reference passing point until reaching the second reference passing point is smaller than a second threshold value set as the second criterion.

16. The map creation method according to claim 9, wherein
a first criterion is based on the moving distance and/or the orientation change of the moving body after passing the first reference passing point until reaching the second reference passing point,
a second criterion is based on elapsed time after the moving body passes the first reference passing point until reaching the second reference passing point, and
the step of determining whether or not to correct includes the step of determining not to correct the position relationship and/or the orientation relationship between the second reference passing point and the second loop point, if the moving distance and/or the orientation change of the moving body after passing the first reference passing point until reaching the second reference passing point is smaller than a first threshold value set as the first criterion, or if the elapsed time after the moving body passes the first reference passing point until reaching the second reference passing point is smaller than a second threshold value set as the second criterion.
